# EUROPEAN PATENT APPLICATION

(11) **EP 4 564 859 A1**
(43) Date of publication of application: **04.06.2025**
(21) Application number: 23849184.9
(22) Date of filing: 12.07.2023
(51) Int. Cl.: H04W 4/30

(54) **COMMUNICATION METHOD AND APPARATUS**

(30) Priority: 04.08.2022 CN 202210931568
(71) Applicant: Huawei Technologies Co., Ltd., Shenzhen, Guangdong 518129 (CN)
(72) Inventor: ZONG, Zaifeng, Shenzhen, Guangdong 518129 (CN); LIAO, Ting, Shenzhen, Guangdong 518129 (CN); ZHOU, Xiaoyun, Shenzhen, Guangdong 518129 (CN); ZHENG, Xiaochun, Shenzhen, Guangdong 518129 (CN)
(74) Representative: Gill Jennings & Every LLP
(86) International application number: PCT/CN2023/106950
(87) International publication number: WO 2024/027475

(57) **Abstract**

This application provides a communication method and apparatus. The method includes: A terminal receives a first message, where the first message includes a first status identifier of a data storage area; the terminal stores a second status identifier of the data storage area; and the terminal determines, based on the first status identifier and the second status identifier, whether to respond to an inventory operation. The terminal may determine, based on the received first status identifier of the data storage area and the corresponding second status identifier on the terminal, whether to respond to the inventory operation, so that flexible response of the terminal is implemented. When the terminal does not respond to the inventory operation, a waste of network resources can be further reduced.

## Description

### CROSS-REFERENCE TO RELATED APPLICATIONS

This application claims priority to Chinese Patent Application No. 202210931568.X, filed with the China National Intellectual Property Administration on August 4, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With development of technologies, the passive internet of things has a prospect of larger-scale application and deployment. However, a passive terminal or a semi-passive terminal can send information to the outside only through external excitation of a reader/writer. During current deployment, a communication distance between the reader/writer and the terminal is short, and management is difficult. Therefore, integrating an inventory capability of the reader/writer into a base station is proposed, where the inventory capability includes operations such as reading, writing, destroying, and locking on the terminal. In other words, the base station supports the inventory capability, and performs inventory on the terminal after excitation by using a radio air interface technology, so that the communication distance between the terminal and the reader/writer is increased and operator base stations are managed in a unified manner.

When the base station performs a reader/writer function, the terminal may be always in a power-on state, and the terminal may repeatedly respond to a same inventory operation, causing a waste of network resources.

### SUMMARY

Embodiments of this application provide a communication method and apparatus, to implement flexible response of a terminal and reduce a waste of network resources.

According to a first aspect, this application provides a communication method, including the following process: A terminal receives a first message, where the first message includes a first status identifier of a data storage area; the terminal stores a second status identifier of the data storage area; and the terminal determines, based on the first status identifier and the second status identifier, whether to respond to an inventory operation.

For example, the terminal may be a passive terminal or a passive tag.

The data storage area is a storage area in a terminal on which inventory is to be performed (that is, the terminal), and the data storage area stores data, for example, location information and sensor data (for example, data such as a temperature and humidity). For example, the status identifier includes but is not limited to at least one of the following: an identifier indicating the location information (in other words, the status identifier may indicate the location information), a read identifier corresponding to the data in the data storage area, or an abnormality record identifier corresponding to the data in the data storage area.

In the method, the terminal may determine, based on the received first status identifier of the data storage area and the corresponding second status identifier on the terminal, whether to respond to the inventory operation, so that flexible response of the terminal is implemented. When the terminal does not respond to the inventory operation, a waste of network resources can be further reduced. The terminal may determine, based on a capability of the terminal, a case in which the terminal responds to the inventory operation and a case in which the terminal does not respond to the inventory operation.

In addition, for a network side, the network side may control, by sending the first message carrying the first status identifier, the terminal to perform matching, to implement the flexible response of the terminal.

In a possible implementation, the terminal may have a location information writing capability, the inventory operation includes a location information write operation, the first status identifier may indicate first location information, and the second status identifier indicates second location information. The first location information may be considered as related location information of a network side that sends the first message and/or location information to be written by the terminal, and the second location information may be location information stored in the data storage area. In this way, the terminal may determine, based on the to-be-written location information and the written location information, whether to respond to the inventory operation, to implement flexible response.

In a possible implementation, when the terminal determines, based on the first status identifier and the second status identifier, whether to respond to the inventory operation, the terminal may determine whether the first location information matches the second location information; and if the first location information matches the second location information, the terminal determines not to respond to the inventory operation; or if the first location information does not match the second location information, the terminal determines to respond to the inventory operation. In other words, that the first location information matches the second location information indicates that the to-be-written first location information is consistent with the currently stored second location information. The terminal does not need to re-write the location information, and does not need to repeatedly respond for feeding back a write result. Therefore, the terminal may not respond to the inventory operation. This helps reduce a waste of network resources. On the contrary, that the first location information does not match the second location information indicates that the to-be-written first location information is inconsistent with the currently stored second location information. The terminal needs to write the location information, to ensure accurate interaction with the terminal in a subsequent communication process.

Optionally, the terminal may directly compare the first location information with the second location information, to determine, through comparison, whether the first location information is the same as the second location information, or the terminal may determine, by using a specific algorithm, whether the first location information matches the second location information.

In a possible implementation, when the terminal determines whether the first location information matches the second location information, the terminal may perform an exclusive OR operation on the first location information and the second location information; and if a bit that is 1 exists in a result of the exclusive OR operation, the terminal determines that the first location information does not match the second location information; or if all bits in the result are 0, the terminal determines that the first location information matches the second location information. In this implementation, the terminal may determine, through the exclusive OR operation, whether the first location information matches the second location information, to perform flexible response.

In a possible implementation, if determining to respond to the inventory operation, the terminal receives a second message, where the second message carries write operation indication information and the to-be-written first location information; and the terminal may write the first location information based on the write operation indication information.

Optionally, if determining to respond to the inventory operation, the terminal may send a first response message, where the first response message indicates that the terminal responds to the inventory operation. The first response message may carry a terminal identifier. Optionally, the terminal identifier and the location information may be stored in a same area of the terminal.

In a possible implementation, the location information may include but is not limited to at least one of the following: a tracking area code TAC, a cell identifier, a base station identifier, or a geographical location.

In a possible implementation, the first status identifier may indicate that inventory is performed on terminals whose locations already change. Matching is performed on the second status identifier based on locally stored location information and location information in a paging message of a base station. If the second status identifier does not match the first status identifier, the second status identifier may be correspondingly set to 1 (or 0), indicating that movement has occurred. The first status identifier sent by a network side may be for terminal selection based on 1 (or 0).

When the terminal determines, based on the first status identifier and the second status identifier, whether to respond to the inventory operation, the terminal may determine whether the first status identifier matches the second status identifier; and if the first status identifier matches the second status identifier, the terminal determines to respond to the inventory operation; or if the first status identifier does not match the second status identifier, the terminal determines not to respond to the inventory operation. That is, if the first status identifier matches second status information, it indicates that a location of the terminal changes, and the terminal needs to re-write information about a changed location, to ensure accurate interaction between the network side and the terminal in a subsequent communication process. On the contrary, if the first status identifier does not match the second status identifier, it indicates that a location of the terminal does not change, and the terminal does not need to re-write the location information, and does not need to repeatedly respond for feeding back a write result. Therefore, the terminal may not respond to the inventory operation. This helps reduce a waste of network resources.

In some scenarios, goods to which a tag 1 is attached move from a location 1 to a location 2. The tag 1 stores information about a location, namely, the location 1, that does not change, and the location information is not updated to the changed location 2. However, for the network side (for example, the base station), the base station may send a paging (paging) message to all tags within coverage of the base station, and the paging message carries information about the location 2. The tag 1 may also receive the paging message. When determining that the location 2 in the paging message is inconsistent with information about the location 1 locally stored in the tag 1, the tag 1 may set a second status identifier stored in the tag 1 to 1, to indicate that the location changes. Subsequently, when the tag 1 receives a message for selecting or filtering a tag whose first status identifier is 1, the tag 1 may determine to update, in response to the inventory operation, the location information stored in the tag 1. When the base station sends a message for selecting or filtering a tag whose first status identifier is 0, and the second status identifier 1 of the tag 1 does not match the first status identifier 0, the tag 1 does not respond to inventory, and another tag that is originally within the coverage of the base station responds to the inventory.

In a possible implementation, the first status identifier may indicate that inventory is performed on a terminal whose location does not change.

For example, when the terminal determines, based on the first status identifier and the second status identifier, whether to respond to the inventory operation, the terminal may determine whether the first status identifier matches the second status identifier; and if the first status identifier matches the second status identifier, the terminal determines to respond to the inventory operation; or if the first status identifier does not match the second status identifier, the terminal determines not to respond to the inventory operation. In other words, if the first status identifier matches the second status identifier, it indicates that the location of the terminal does not change, and the terminal belongs to a tag range in which inventory is performed. On the contrary, if the first status identifier does not match the second status identifier, it indicates that the location of the terminal changes, and the terminal does not belong to a tag range in which inventory is performed.

In a possible implementation, the terminal may have an identifier reading capability. The inventory operation includes a data read operation. The first status identifier includes a first read identifier corresponding to data in a first area. In other words, the first status identifier indicates that inventory is performed on the data of the first read identifier in the first area. The first area is a data storage area of to-be-read data. The second status identifier includes a second read identifier corresponding to the data in the first area.

For example, if the read identifier is set to 1 (or 0), it indicates data that has been read; or if the read identifier is set to 0 (or 1), it indicates data that has not been read. If the first read identifier is 1, it may be considered that a network side expects to perform repeated inventory on the data that has been read. If the first read identifier is 0, it may be considered that a network side expects to perform inventory on the data that has not been read.

In a possible implementation, when the terminal determines, based on the first status identifier and the second status identifier, whether to respond to the inventory operation, the terminal may determine whether the first read identifier matches the second read identifier; and if the first read identifier matches the second read identifier, the terminal determines to respond to the inventory operation; or if the first read identifier does not match the second read identifier, the terminal determines not to respond to the inventory operation. That the first read identifier does not match the second read identifier indicates that the data in the first area is not reported in a current round of reading. Therefore, the terminal may not respond to the inventory operation. This helps reduce a waste of network resources.

In a possible implementation, the first status identifier may indicate that inventory is performed, in the first area, on data whose read identifier changes, or indicate that inventory is performed, in the first area, on data whose read identifier remains unchanged. Correspondingly, the second status identifier on the terminal may also indicate that the read identifier corresponding to the data in the first area changes, or indicate that the read identifier corresponding to the data in the first area remains unchanged.

In a possible implementation, when determining whether the first read identifier matches the second read identifier, the terminal performs an exclusive OR operation on the first read identifier and the second read identifier; and if a result of the exclusive OR operation is 0, the terminal determines that the first read identifier matches the second read identifier; or if the result is 1, the terminal determines that the first read identifier does not match the second read identifier. In this implementation, the terminal may determine, through the exclusive OR operation, whether the first read identifier matches the second read identifier, to perform flexible response.

In a possible implementation, if determining to respond to the inventory operation, the terminal receives a third message, where the third message carries read operation indication information, and the read operation indication information indicates to read data in the first area; and the terminal replies with the read data.

Optionally, if the second read identifier corresponding to the data in the first area on the terminal indicates that the data has not been read, after reading the data, the terminal may modify the second read identifier to indicate that the data has been read.

Optionally, if determining to respond to the inventory operation, the terminal may send a second response message, where the second response message indicates that the terminal meets an inventory operation condition and may respond to the inventory operation. The second response message may carry a terminal identifier.

In a possible implementation, the terminal may have an abnormality alarm capability. The inventory operation includes a data read operation. The first status identifier includes a first abnormality record identifier corresponding to data in a second area. In other words, the first status identifier indicates that inventory is performed on the data of the first abnormality record identifier in the second area. The second status identifier includes a second abnormality record identifier corresponding to the data in the second area. The second area is a data storage area of monitoring data.

For example, if the abnormality record identifier is set to 1 (or 0), it indicates abnormality; or if the abnormality record identifier is set to 0 (or 1), it indicates normality. If the first abnormality record identifier is 1, it may be considered that a network side expects to perform inventory on abnormal data. If the first abnormality record identifier is 0, it may be considered that a network side expects to perform inventory on normal data.

In a possible implementation, when the terminal determines, based on the first status identifier and the second status identifier, whether to respond to the inventory operation, the terminal may determine whether the first abnormality record identifier matches the second abnormality record identifier; and if the first abnormality record identifier matches the second abnormality record identifier, the terminal determines to respond to the inventory operation; or if the first abnormality record identifier does not match the second abnormality record identifier, the terminal determines not to respond to the inventory operation. That the first abnormality record identifier does not match the second abnormality record identifier indicates that the data in the second area is not reported in a current round of reading. Therefore, the terminal may not respond to the inventory operation. This helps reduce a waste of network resources.

In a possible implementation, when the terminal determines whether the first abnormality record identifier matches the second abnormality record identifier that corresponds to the second area and that is stored in the terminal, the terminal performs an exclusive OR operation on the first abnormality record identifier and the second abnormality record identifier; and if a result of the exclusive OR operation is 0, the terminal determines that the first abnormality record identifier matches the second abnormality record identifier; or if the result is 1, the terminal determines that the first abnormality record identifier does not match the second abnormality record identifier. In this implementation, the terminal may determine, through the exclusive OR operation, whether the first abnormality record identifier matches the second abnormality record identifier, to perform flexible response.

In a possible implementation, if determining to respond to the inventory operation, the terminal receives a fourth message, where the fourth message carries read operation indication information, and the read operation indication information indicates to read data in the second area; and the terminal replies with the read data.

Optionally, if determining to respond to the inventory operation, the terminal may send a second response message, where the second response message indicates that the terminal responds to the inventory operation. The second response message may carry a terminal identifier.

In a possible implementation, when the data in the second area meets a first value range, the terminal may further modify the second abnormality record identifier corresponding to the data in the second area to "abnormality".

In a possible implementation, the terminal may further start a random access procedure.

According to a second aspect, this application provides a communication method, including the following process: A management network element obtains capability information of a terminal, where the capability information of the terminal indicates an inventory operation supported by the terminal; and the management network element sends a fifth message based on the capability information of the terminal, where the fifth message includes a first status identifier of a data storage area.

For example, the status identifier includes but is not limited to at least one of the following: an identifier indicating location information, a read identifier corresponding to data in the data storage area, or an abnormality record identifier corresponding to the data in the data storage area.

In a possible implementation, the management network element may further determine a value of the first status identifier based on a current scenario, to obtain a terminal that meets a value condition for responding. For example, in a location information writing scenario, the value of the first status identifier may be a value of first location information. For example, the first location information may include one or more of a TAC, a cell ID, or a base station ID configured within coverage of a base station. For another example, the first location information may include one or more of a TAC, a cell ID, or a base station ID that is not within coverage of a base station. For another example, in a location change scenario, the value of the first status identifier may be a value (for example, but not limited to 1) indicating that inventory is performed on a terminal whose location changes, or a value (for example, but not limited to 0) indicating that inventory is performed on a terminal whose location does not change. For another example, in a data reading scenario, the value of the first status identifier may be a value (for example, but not limited to 1) indicating that inventory is performed on read data, and indicate that repeated inventory is performed on the read data; or the value of the first status identifier may be a value (for example, but not limited to 0) indicating that inventory is performed on data that has not been read, and indicate that inventory is performed, for the 1^{st} time, on the data that has not been read. For another example, in an abnormality monitoring scenario, the value of the first status identifier may be a value (for example, but not limited to 1) indicating that inventory is performed on abnormal data, and indicate that inventory is performed on abnormal monitoring data; or the value of the first status identifier may be a value (for example, but not limited to 0) indicating that inventory is performed on normal data, and indicate that statistics on normal monitoring data collected by the terminal is collected.

In a possible implementation, the terminal may further determine, based on a scenario, a value of a second status identifier, to match a value condition sent by a network side. For example, in a location information writing scenario, the value of the second status identifier may be a value of second location information. For example, the second location information may include one or more of a TAC, a cell ID, or a base station ID of a location of the terminal. For another example, in a location change scenario, the value of the second status identifier may be a value (for example, but not limited to 1) for location changing, or a value (for example, but not limited to 0) indicating that a location does not change. For another example, in a data reading scenario, the value of the second status identifier may be a value (for example, but not limited to 1) indicating that the data has been read, or a value (for example, but not limited to 0) indicating that the data has not been read. For another example, in an abnormality monitoring scenario, the value of the first status identifier may be a value (for example, but not limited to 1) indicating abnormal data, or a value (for example, but not limited to 0) indicating normality.

In a possible implementation, the capability information of the terminal indicates that the terminal has a location information writing capability, the inventory operation includes a location information write operation, and the first status identifier indicates the first location information.

In a possible implementation, the management network element may further send a second message, where the second message carries write operation indication information and the to-be-written first location information.

Optionally, the management network element may further receive a first response message, and send the second message based on the first response message.

Optionally, the fifth message further includes indication information for obtaining a location.

In a possible implementation, the management network element may further receive an inventory request message, where the inventory request message includes a range of terminals on which the inventory operation is to be performed, a periodicity for performing the inventory operation, the indication information for obtaining the location, and a range of access network elements on which the inventory operation is to be performed. Optionally, an application network element may send the inventory request to the management network element.

In a possible implementation, the capability information of the terminal indicates that the terminal has an identifier reading capability, the inventory operation includes a data read operation, the first status identifier includes a first read identifier corresponding to data in a first area, and the first area is a data storage area of to-be-read data.

In a possible implementation, the management network element may further send a third message, where the third message carries read operation indication information, and the read operation indication information indicates to read data in the first area. Optionally, the third message further includes information about the first area. The management network element may further receive data that is in the first area and that is reported by the terminal.

Optionally, the third message may further include the first read identifier corresponding to the data in the first area.

Optionally, the management network element may further receive a second response message, and send the third message based on the second response message.

In a possible implementation, the management network element may further receive an inventory request message, where the inventory request message includes a range of terminals on which the inventory operation is to be performed, a periodicity for performing the inventory operation, the information about the first area, and a range of access network elements on which the inventory operation is to be performed.

In a possible implementation, the inventory operation includes a data read operation, the first status identifier includes a first abnormality record identifier corresponding to data in a second area, and the second area is a data storage area of monitoring data.

In a possible implementation, the management network element may further send a fourth message, where the fourth message carries read operation indication information, and the read operation indication information indicates to read data in the second area. Optionally, the fourth message further includes information about the second area. The management network element may further receive data that is in the second area and that is reported by the terminal.

Optionally, the fourth message may further include the first abnormality record identifier corresponding to the data in the second area.

Optionally, the management network element may further receive a third response message, and send the fourth message based on the third response message.

In a possible implementation, the management network element may further receive an inventory request message, where the inventory request message includes a range of terminals on which the inventory operation is to be performed, a periodicity for performing the inventory operation, the information about the second area, and a range of access network elements on which the inventory operation is to be performed.

In a possible implementation, the management network element may further receive the monitoring data reported by the terminal; and when the monitoring data meets a second value range, the management network element performs a terminal damage alarm. When the monitoring data meets the second value range, it may be considered that the terminal (used as a sensor for collecting the monitoring data) is abnormal or damaged. Therefore, a damage warning may be given to the terminal.

According to a third aspect, this application provides a communication method, including the following process: An access network element receives a fifth message, where the fifth message includes a first status identifier of a data storage area; and the access network element sends a first message based on the fifth message, where the first message includes the first status identifier of the data storage area.

For example, the status identifier includes but is not limited to at least one of the following: an identifier indicating location information, a read identifier corresponding to data in the data storage area, or an abnormality record identifier corresponding to the data in the data storage area.

In a possible implementation, the first status identifier indicates first location information.

In a possible implementation, the access network element may further send a second message, where the second message carries write operation indication information and the to-be-written first location information. Optionally, the access network element may further receive a first response message, and send the second message based on the first response message.

In a possible implementation, the access network element may further receive an inventory request message, where the inventory request message includes a range of terminals on which an inventory operation is to be performed, a periodicity for performing the inventory operation, indication information for obtaining a location, and a range of access network elements on which the inventory operation is to be performed.

In a possible implementation, the access network element may further determine the first location information based on the first status identifier; and the access network element sends the first location information.

In a possible implementation, the first status identifier includes a first read identifier corresponding to data in a first area, and the first area is a data storage area of to-be-read data.

In a possible implementation, the access network element may further send a third message, where the third message carries read operation indication information, and the read operation indication information indicates to read data in the first area. Optionally, the third message further includes information about the first area. The access network element may further receive data that is in the first area and that is reported by the terminal.

Optionally, the third message may further include the first read identifier corresponding to the data in the first area.

Optionally, the access network element may further receive a second response message, and send the third message based on the second response message.

In a possible implementation, the access network element may further receive an inventory request message, where the inventory request message includes a range of terminals on which the inventory operation is to be performed, a periodicity for performing the inventory operation, the information about the first area, and a range of access network elements on which the inventory operation is to be performed.

In a possible implementation, the first status identifier includes a first abnormality record identifier corresponding to data in a second area, and the second area is a data storage area of monitoring data.

In a possible implementation, the access network element may further send a fourth message, where the fourth message carries read operation indication information, and the read operation indication information indicates to read data in the second area. Optionally, the third message further includes information about the second area. The access network element may further receive data that is in the second area and that is reported by the terminal.

Optionally, the fourth message may further include the first abnormality record identifier corresponding to the data in the second area.

Optionally, the access network element may further receive a third response message, and send the fourth message based on the third response message.

In a possible implementation, the access network element may further receive an inventory request message, where the inventory request message includes a range of terminals on which the inventory operation is to be performed, a periodicity for performing the inventory operation, the information about the second area, and a range of access network elements on which the inventory operation is to be performed.

In a possible implementation, the access network element may further determine a value of the first status identifier based on a current scenario, to obtain a terminal that meets a value condition for responding. For similarities, refer to the foregoing management network element.

In a possible implementation, the access network element may further receive the monitoring data reported by the terminal; and when the monitoring data meets a second value range, the access network element performs a terminal damage alarm. When the monitoring data meets the second value range, it may be considered that the terminal (used as a sensor for collecting the monitoring data) is abnormal or damaged. Therefore, a damage warning may be given to the terminal.

According to a fourth aspect, a communication apparatus is provided. The communication apparatus may be a terminal, an access network element, or a management network element, or a chip disposed in the terminal, the access network element, or the management network element. The communication apparatus may implement the method according to the first aspect, the second aspect, or the third aspect.

The communication apparatus includes a corresponding module, unit, or means (means) for implementing the foregoing method. The module, unit, or means may be implemented by using hardware or software, or implemented by using hardware by executing corresponding software. The hardware or the software includes one or more modules or units corresponding to the foregoing function.

According to a fifth aspect, a communication apparatus is provided, and includes a transceiver unit. Optionally, the communication apparatus may further include a processing unit. The communication apparatus may implement the method according to any one of the first aspect, the second aspect, the third aspect, or the implementations of the first aspect, the second aspect, and the third aspect.

According to a sixth aspect, a communication apparatus is provided, and includes a processor. The processor may be configured to perform the method according to any one of the first aspect, the second aspect, the third aspect, or the implementations of the first aspect, the second aspect, and the third aspect. Optionally, the apparatus further includes a memory. The processor is coupled to the memory. The memory is configured to store a computer program or instructions. The processor may execute the program or the instructions in the memory, so that the apparatus can perform the method according to any one of the first aspect, the second aspect, the third aspect, or the implementations of the first aspect, the second aspect, and the third aspect.

According to a seventh aspect, a communication apparatus is provided. The apparatus includes an interface circuit and a logic circuit, and the logic circuit is coupled to the interface circuit. The interface circuit may be a code/data read/write interface circuit. The interface circuit is configured to receive computer-executable instructions (the computer-executable instructions are stored in a memory, and may be directly read from the memory, or may be read through another component) and transmit the computer-executable instructions to the logic circuit, so that the logic circuit runs the computer-executable instructions to perform the method according to any one of the first aspect, the second aspect, the third aspect, or the implementations of the first aspect, the second aspect, and the third aspect.

In some possible designs, the communication apparatus may be a chip or a chip system.

According to an eighth aspect, a communication apparatus is provided, including a processor. The processor is coupled to a memory. The processor is configured to read instructions stored in the memory, receive a signal through a receiver, and transmit a signal through a transmitter, to perform the method according to any one of the first aspect, the second aspect, the third aspect, or the implementations of the first aspect, the second aspect, and the third aspect.

Optionally, there may be one or more processors, and one or more memories. Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

The communication apparatus may be a chip, and the processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated in the processor, or may be located outside the processor and exist independently.

According to a ninth aspect, a processor is provided, and includes an input circuit, an output circuit, and a processing circuit. The processing circuit is configured to receive a signal by using the input circuit, and transmit a signal by using the output circuit, so that the processor performs the method according to any one of the first aspect, the second aspect, the third aspect, or the implementations of the first aspect, the second aspect, and the third aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a tenth aspect, a communication apparatus is provided, and includes a logic circuit and an input/output interface. The input/output interface is configured to communicate with a module other than the communication apparatus. The logic circuit is configured to run a computer program or instructions to perform the method according to any design of the first aspect, the second aspect, or the third aspect. The communication apparatus may be the terminal, the management network element, or the access network element in the first aspect, the second aspect, or the third aspect, or an apparatus including the terminal, the management network element, or the access network element, or an apparatus included in the terminal, the management network element, or the access network element, for example, a chip.

Alternatively, the input/output interface may be a code/data read/write interface circuit, or a communication interface. The input/output interface is configured to: receive a computer program or instructions (the computer program or instructions are stored in a memory, and may be directly read from the memory, or may be read through another component) and transmit the computer program or instructions to the input/output interface, so that the input/output interface runs the computer program or instructions to perform the method in the first aspect, the second aspect, or the third aspect.

Optionally, the communication apparatus may be a chip.

According to an eleventh aspect, a computer program product is provided. The computer program product includes a computer program (which may also be referred to as code or instructions), and when the computer program is run, a computer is enabled to perform the method according to any one of the foregoing aspects or the implementations of the foregoing aspects.

According to a twelfth aspect, a computer-readable medium is provided. The computer-readable medium stores a computer program (which may also be referred to as code or instructions), and when the computer program is run on a computer, the computer is enabled to perform the method according to any one of the first aspect, the second aspect, the third aspect, or the implementations of the first aspect, the second aspect, and the third aspect.

According to a thirteenth aspect, a chip system is provided. The chip system includes a processor and an interface, and is configured to support a communication apparatus in implementing a function according to any one of the first aspect, the second aspect, the third aspect, or the implementations of the first aspect, the second aspect, and the third aspect. In a possible design, the chip system further includes a memory, configured to store necessary information and data of the foregoing communication apparatus. The chip system may include a chip, or may include a chip and another discrete component.

According to a fourteenth aspect, a chip apparatus is provided. The chip apparatus includes an input interface and/or an output interface. The input interface may implement the receiving function according to any one of the first aspect, the second aspect, the third aspect, or the implementations of the first aspect, the second aspect, and the third aspect, and the output interface may implement the communication function according to any one of the first aspect, the second aspect, the third aspect, or the implementations of the first aspect, the second aspect, and the third aspect.

According to a fifteenth aspect, a functional entity is provided. The functional entity is configured to implement the method according to any one of the first aspect, the second aspect, the third aspect, or the implementations of the first aspect, the second aspect, and the third aspect.

According to a sixteenth aspect, a communication system is provided, and includes a terminal configured to perform the method in the first aspect, a management network element configured to perform the method in the second aspect, and an access network element configured to perform the method in the third aspect.

For technical effects brought by any one of the implementations of the second aspect to the sixteenth aspect, refer to the technical effects brought by the first aspect. Details are not described herein again.

### BRIEF DESCRIPTION OF DRAWINGS

FIG. 1 is a diagram of a network architecture;
FIG. 2 is a diagram of a tag management system;
FIG. 3 is a diagram of a communication process according to an embodiment of this application;
FIG. 4 is a diagram of a communication process according to an embodiment of this application;
FIG. 5 is a diagram of a communication process according to an embodiment of this application;
FIG. 6 is a diagram of a communication process according to an embodiment of this application;
FIG. 7 is a diagram of a communication process according to an embodiment of this application;
FIG. 8 is a diagram of a communication process according to an embodiment of this application;
FIG. 9 is a diagram of a structure of a communication apparatus according to an embodiment of this application;
FIG. 10 is a diagram of a structure of a communication apparatus according to an embodiment of this application; and
FIG. 11 is a diagram of a structure of a communication apparatus according to an embodiment of this application.

### DESCRIPTION OF EMBODIMENTS

The following further describes in detail this application with reference to accompanying drawings.

The technical solutions in embodiments of this application may be applied to a mobile communication system. For example, the mobile communication system may be a 4th generation (4th Generation, 4G) communication system (for example, a long term evolution (long term evolution, LTE) system), a 5th generation (5th generation, 5G) mobile communication system (for example, a new radio (new radio, NR) system), a future mobile communication system such as 6G, or the like.

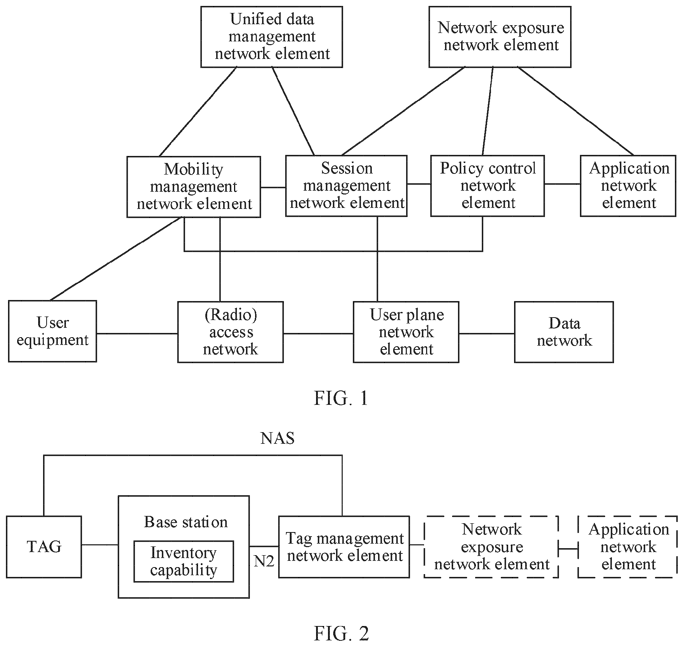

FIG. 1 is a diagram of a network architecture according to an embodiment of this application. The network architecture includes user equipment, a (radio) access network device, a user plane network element, a data network, a mobility management network element, a session management network element, an application network element, a unified data management network element, a policy control network element, a network exposure network element, and the like. The following separately describes the network elements in the network architecture.

1. User equipment (user equipment, UE): The user equipment may also be referred to as an access terminal, a terminal, a subscriber unit, a subscriber station, a mobile station, a remote station, a remote terminal, a mobile device, a user terminal, a user agent, a user apparatus, or the like. The terminal may be a passive internet of things terminal, or may be a tag. The terminal may be a passive device. The passive device may be a passive tag. The passive tag may collect energy by using a backscattering technology, to receive and send a packet. The passive tag includes but is not limited to a terminal tag without a power supply, for example, radio frequency identification (radio frequency identification, RFID), Bluetooth, or Zigbee. The terminal may alternatively be a semi-passive device or an active device. The active device may be a device having a wireless transceiver function, for example, a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

The wearable device may also be referred to as a wearable intelligent device, and is a general term of wearable devices, such as glasses, gloves, watches, clothes, and shoes, that are intelligently designed and developed for daily wear by using a wearable technology. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-size devices that can implement complete or partial functions without depending on smartphones, for example, smart watches or smart glasses, and devices that dedicated to only one type of application and need to be used together with other devices such as smartphones, such as various smart bands or smart jewelry used for monitoring physical signs.

2. (Radio) access network (radio access network, (R)AN) device: The access network device may also be referred to as an access device. The (R)AN can manage a radio resource, provide an access service for user equipment, and complete forwarding of user equipment data between the user equipment and a core network. The (R)AN may also be understood as a base station in a network.

For example, the access network device in embodiments of this application may be any communication device having a wireless transceiver function for communicating with the user equipment. The access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (home evolved NodeB, HeNB, or home NodeB, HNB), a building baseband unit (building baseband unit, BBU), a transmission reception point (transmission reception point, TRP), a transmission point (transmission point, TP), or the like, may be a next generation base station, a next generation NodeB (generation NodeB, gNB), or a transmission point (TRP or TP) in a 5G system such as an NR system, may be one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. The information at the RRC layer is generated by the CU, and is finally encapsulated at the PHY layer of the DU into the information at the PHY layer, or is transformed from the information at the PHY layer. Therefore, in this architecture, higher layer signaling, for example, RRC layer signaling, may also be considered to be sent by the DU, or sent by the DU and the AAU. It may be understood that the access network device may be a device including one or more of a CU node, a DU node, and an AAU node. In addition, the CU may be classified as an access network device in an access network (radio access network, RAN), or the CU may be classified as an access network device in a core network (core network, CN). This is not limited in this application.

3. User plane network element: The user plane network element serves as an interface to a data network, and completes functions such as user plane data forwarding, session/flow-level-based charging statistics collection, and bandwidth throttling, to be specific, packet routing and forwarding, quality of service (quality of service, QoS) handling for user plane data, and the like.

In a 5G communication system, the user plane network element may be a user plane function (user plane function, UPF) network element.

4. Data network: The data network is configured to provide a network for data transmission, provides, for example, a carrier service, an Internet access service, or a third-party service, and includes a server, where a server side implements video source encoding, rendering, and the like. In a 5G communication system, the data network may be a data network (data network, DN).

5. Mobility management network element: The mobility management network element is mainly configured to perform mobility management, access management, and the like. In a 5G communication system, the access management network element may be an access and mobility management function (access and mobility management function, AMF), and mainly performs functions such as mobility management and access authentication/authorization. In addition, the access management network element is further responsible for transferring a user policy between a terminal and a policy control function (policy control function, PCF) network element.

6. Session management network element: The session management network element is mainly configured to: manage a session, allocate and manage an internet protocol (internet protocol, IP) address of user equipment, select an endpoint that can manage a user plane function interface and a policy control and charging function interface, perform downlink data notification, and the like.

In a 5G communication system, the session management network element may be a session management function (session management function, SMF) network element, and completes terminal IP address allocation, UPF selection, charging, QoS policy control, and the like.

7. Application network element: In a 5G communication system, the application network element may be an application function (application function, AF) network element, represents an application function of a third party or a carrier, is an interface for obtaining external application data in a 5G network, and is mainly configured to transfer a requirement of an application side for a network side.

8. Unified data management network element: The unified data management network element is responsible for management of a user identifier, subscription data, and authentication data, and serving network element registration management of a user. In a 5G communication system, the unified data management network element may be a unified data management (unified data management, UDM).

9. Policy control network element: The policy control network element includes a user subscription data management function, a policy control function, a charging policy control function, QoS control, and the like, is a unified policy framework for guiding network behavior, and provides policy rule information and the like for a control plane function network element (for example, an AMF network element or an SMF network element).

In a 5G communication system, the policy control network element may be a PCF.

10. Network exposure network element: In a 5G communication system, the network exposure network element may be a network exposure function (network exposure function, NEF) network element, is mainly configured to expose a service and a capability of a 3GPP network function to an AF, and may also enable the AF to provide information for the 3GPP network function.

Optionally, the network architecture may include more or fewer network elements than the network elements shown above. For example, the network architecture may further include a tag management network element. In the 5G communication system, the tag management network element may be a tag management function (tag management function, TMF).

The function network element may be a network element in a hardware device, a software function running on dedicated hardware, or a virtualization function instantiated on a platform (for example, a cloud platform). One or more services may be obtained through division based on the foregoing function network element. Further, a service independent of a network function may exist. In this application, an instance of the function network element, an instance of the service included in the function network element, and an instance of the service that is independent of the network function may all be referred to as service instances.

An internet of things may implement information sharing between objects and intelligent collection, transferring, processing, and execution. In a passive internet of things (passive internet of things, P-IoT), an internet of things terminal (for example, RFID, a tag (TAG or Label), or a transponder (Transponder)) may be deployed in scenarios such as logistics and warehousing, and industrial manufacturing. For example, if the internet of things terminal is deployed in the logistics and warehousing scenario, the P-IoT may implement goods inventory and tracking, and monitoring of a transportation process environment and a goods status of high-value goods (such as vaccines). For another example, if the internet of things terminal is deployed in the industrial manufacturing scenario, the P-IoT may implement environment and device status monitoring.

The P-IoT internet of things terminal (referred to as a terminal below) may be an active terminal, a passive terminal, or a semi-passive terminal. The passive terminal or the semi-passive terminal needs to rely on external excitation to send information, and the external excitation usually comes from a reader/writer (or referred to as a card reader). In current deployment, a communication distance between the reader/writer and the terminal is short, and management is difficult. Therefore, integrating an inventory capability of the reader/writer into a base station is proposed. In other words, the base station supports the inventory capability, and performs inventory on the terminal after excitation by using a radio air interface technology, so that the communication distance between the terminal and the reader/writer is increased and operator base stations are managed in a unified manner. The inventory capability includes but is not limited to operations such as reading, writing, destroying, and locking on the P-IoT internet of things terminal.

FIG. 2 is a diagram of a network architecture according to an embodiment of this application. The network architecture includes a TAG, a base station (supporting an inventory capability), a tag management network element, a network exposure network element (optional), and an application network element (optional). The TAG is an example of UE. The tag management network element may separately interact with the TAG, the base station, and the network exposure network element. The TAG interacts with the tag management network element by using non-access stratum (non-access stratum, NAS) signaling, and the base station interacts with the tag management network element through an N2 interface.

A reader/writer (for example, the base station in FIG. 2) may power on the TAG for working. After the TAG is powered on, the TAG may be in one of a plurality of states such as a ready state, an arbitrated state, a responded state, an acknowledged state, a public state, a confidential state, and a destroyed state. When the TAG is in the public status, the reader/writer may select a TAG range by using a command selection mask (MASK), and the reader/writer performs a subsequent inventory operation on a TAG within the TAG range. Usually, the reader/writer selects the TAG range by using tag identifiers (TAG identifiers, TIDs) of a group of TAGs or a common part of an electronic product code (electronic product code, EPC) as a part of the MASK for aggregation.

In a state transition process, the TAG replies to an access command carrying a valid field, and does not respond to a negative acknowledgement (negative acknowledgement, NAK) command of the reader/writer or an access command carrying an invalid field. When the base station performs the reader/writer function, the TAG may be always in a power-on state. As a result, the TAG may repeatedly respond to a same inventory operation, causing a waste of network resources.

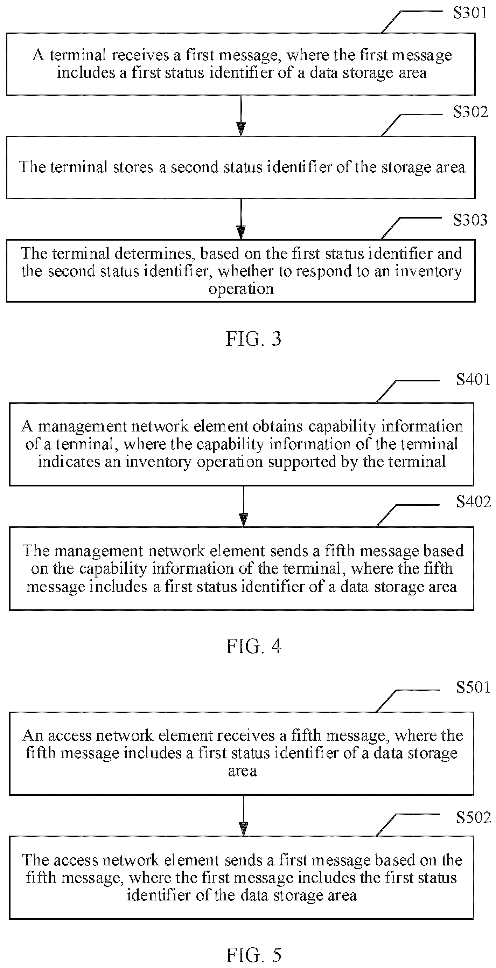

Based on this, embodiments of this application provide a communication method, to implement flexible response of a terminal and reduce a waste of network resources. FIG. 3 is a diagram of a communication method, including the following steps.

S301: A terminal receives a first message, where the first message includes a first status identifier of a data storage area.

In a possible implementation, the terminal is a passive (or semi-passive) terminal, a passive (or semi-passive) tag, a zero power consumption terminal, an ambient power-enabled (Ambient power-enabled) terminal, or the like.

Optionally, the first message is a tag selection (selection) message or a filtering message.

S302: The terminal stores a second status identifier of the storage area.

A sequence of S301 and S302 may be changed.

S303: The terminal determines, based on the first status identifier and the second status identifier, whether to respond to an inventory operation.

In the method, the terminal may determine, based on the received first status identifier of the data storage area and the corresponding second status identifier on the terminal, whether to respond to the inventory operation, so that flexible response of the terminal is implemented. When the terminal does not respond to the inventory operation, a waste of network resources can be further reduced.

**In** addition, for a network side (a network element other than the terminal, for example, an access network element, a core network element, or a management network element), the network side may control, by sending the first message carrying the first status identifier, the terminal to perform matching, to implement the flexible response of the terminal.

**In** a possible implementation, in S301, the management network element or the access network element sends the first message to the terminal. For descriptions of sending the first message by the management network element, refer to the following FIG. 4. For descriptions of sending the first message by the access network element, refer to the following FIG. 5. Optionally, the management network element and the access network element may be deployed in different network elements, or may be deployed in a same network element. For example, a function of the management network element is integrated into the access network element.

If the management network element and the access network element are deployed in different network elements, the first message may be sent by the access network element after the access network element receives an inventory command of the management network element. Optionally, the first message may include information related to the inventory command. For example, the inventory command indicates a write operation, and the first message may include a terminal selection range and to-be-written location information on the terminal. For another example, the inventory command indicates a read operation, and the first message may include a read identifier of to-be-read data.

The terminal may determine, based on a capability of the terminal, a case in which the terminal responds to the inventory operation and a case in which the terminal does not respond to the inventory operation. For example, when the terminal meets an inventory operation condition (or a value condition), the terminal responds to the inventory operation; or when the terminal does not meet an inventory operation condition (or a value condition), the terminal does not respond to the inventory operation. For related content, refer to the following examples.

The capability of the terminal includes an inventory operation supported by the terminal. Optionally, the capability of the terminal further includes a correspondence between an area, data, and a status identifier, and the correspondence may be used by the terminal to read data stored in an area (in the data storage area) and read a second status identifier corresponding to the area. By way of example but not limitation, the terminal may determine, based on the correspondence, data stored in a first area and a second data read record corresponding to the data in the first area. It may be understood that the capability of the terminal may also be obtained by the network side (for example, the management network element or the access network element), so that the network side controls the terminal (for example, controls the terminal to perform matching) based on the capability of the terminal.

Example 1: The terminal has a location information writing capability.

Example 1 (1): The inventory operation includes a location information write operation, the first status identifier indicates first location information, and the second status identifier indicates second location information.

In S303, the terminal may determine, depending on whether the first location information matches the second location information, whether to respond to the inventory operation.

The location information may include but is not limited to one or more of the following: identifier (identifier, ID) information of a base station, cell identifier (cell ID) information, tracking area code (tracking area code, TAC) information, a geographical location, or the like.

Optionally, the first location information is location information related to (or not related to) a base station that sends the first message, the first location information is location information to be written by the terminal, the first location information is information about a location of the terminal that does not change, or the first location information is information about a changed location of the terminal. It is clear that in some cases, the first location information may not be related to the base station that sends the first message, or may not be related to a current location of the terminal, and is only location information for matching the second location information stored in the terminal.

Optionally, the first location information is related to the location of the terminal, that is, belongs to coverage of the base station that sends the first message, and is location information related to the base station. If the terminal accesses a network for the 1^{st} time, and the terminal does not store the location information of the location of the terminal in advance, the terminal usually responds to the inventory operation, and the first location information may not be carried in the first message.

However, when the second location information has been written into the terminal, and the first location information matches the second location information, or when the first location information is consistent with the second location information, the terminal does not respond. In this case, the terminal does not need to re-write the location information, and does not need to repeatedly respond for feeding back a result. Therefore, the terminal may not respond to the inventory operation. This helps reduce a waste of network resources.

When the first location information does not match the second location information, or when the first location information is inconsistent with the second location information, the terminal responds. In this case, it indicates that the terminal needs to write the location information. Therefore, the terminal needs to respond to the inventory operation, to ensure accurate interaction between the network side and the terminal in a subsequent communication process.

For example, the terminal may directly compare the first location information with the second location information, and determine, by comparing whether the first location information is the same as the second location information, whether the first location information matches the second location information. For example, if the first location information is the same as the second location information, it is considered that the first location information matches the second location information. On the contrary, if the first location information is different from the second location information, it is considered that the first location information does not match the second location information. If the first location information matches the second location information, the inventory operation is not responded to; or if the first location information does not match the second location information, the inventory operation is responded to.

For another example, the terminal may determine, by using a specific algorithm, whether the first location information matches the second location information. For example, the terminal may perform an AND operation or an exclusive OR operation on the first location information and the second location information, and determine, based on an operation result, whether the first location information matches the second location information.

For example, when determining whether the first location information matches the second location information, the terminal may perform the exclusive OR operation on the first location information and the second location information. Bitwise exclusive OR means that if two corresponding binary bit values are different, a result is 1; or if two corresponding binary bit values are the same, a result is 0. If a bit that is 1 exists in the result of the exclusive OR operation, it may be determined that the first location information does not match the second location information; or if all bits in the result of the exclusive OR operation are 0, it may be determined that the first location information matches the second location information. For example, a binary representation of the first location information is 1011 (which is merely an example). If a binary representation of the second location information stored in the terminal is 1011, and the result of the exclusive OR operation is 0000, it indicates that the first location information matches the second location information; or if a binary representation of the second location information stored in the terminal is 0000, and the result of the exclusive OR operation is 1011, it indicates that the first location information does not match the second location information.

In a possible implementation, if determining to respond to the inventory operation, the terminal may receive a second message, where the second message carries write operation indication information and the to-be-written first location information. In this way, the terminal may write the first location information into the data storage area based on the write operation indication information. A first response message indicates that the terminal responds to the inventory operation, to be specific, is for notifying the management network element or the access network element that the terminal responds to the inventory operation.

Optionally, if determining to respond to the inventory operation, the terminal may further report a terminal identifier of the terminal. The terminal identifier may be carried in the first response message, and be for notifying the management network element or the access network element of a terminal that responds to the inventory operation.

Optionally, the terminal identifier and the location information may be stored in a same area (or different areas) of the data storage area.

Example 1 (2): The inventory operation includes a location information write operation, and the first status identifier indicates that inventory is performed on a terminal whose location changes or indicates that inventory is performed on a terminal whose location does not change.

In S303, the terminal may determine, depending on whether the first status identifier matches the second status identifier, whether to respond to the inventory operation.

For example, if the status identifier is set to a first value (for example, but not limited to 1 or 0), it indicates that the location changes; or if the status identifier is set to a second value (for example, but not limited to 0 or 1), it indicates that the location does not change.

In a possible implementation, the first status identifier indicates that inventory is performed on the terminal whose location changes.

When a first value of the first status identifier matches a first value of the second status identifier, it indicates that the network side expects to perform inventory on the terminal whose location changes, and a location change mark on the terminal is set (for example, a locally stored TAC is compared with a TAC in a paging message for matching, and when the locally stored TAC is inconsistent with the TAC in the paging message, the location change mark on the terminal is set to a first value). The terminal needs to re-write information about a changed location, to ensure accuracy of a subsequent communication process.

When the first status identifier does not match the second status identifier, for example, the network side expects to perform inventory on the terminal whose location changes, but the second status identifier on the terminal indicates that the location does not change, the terminal does not need to re-write the location information, or the terminal does not belong to a tag range in which inventory is performed. Therefore, the terminal may not respond to the inventory operation. This helps reduce a waste of network resources.

For example, the terminal may directly perform consistency comparison between the first status identifier and the second status identifier, to determine whether the first status identifier matches the second status identifier.

For another example, the terminal may determine, by using a specific algorithm, whether the first status identifier matches the second status identifier. For example, the terminal performs an exclusive OR operation on the first status identifier and the second status identifier; and if a result of the exclusive OR operation is 0, the terminal determines that the first status identifier matches the second status identifier; or if a result of the exclusive OR operation is 1, the terminal determines that the first status identifier does not match the second status identifier.

In another possible implementation, the first status identifier indicates that inventory is performed on the terminal whose location does not change.

In an example, the terminal may determine whether the first status identifier matches the second status identifier; and if the first status identifier matches the second status identifier, the terminal determines to respond to the inventory operation; or if the first status identifier does not match the second status identifier, the terminal determines not to respond to the inventory operation. In other words, when the first status identifier is the second value, and the second status identifier is the second value, it indicates that the location of the terminal does not change. When the first status identifier can match the second status identifier, that is, when the first value is the same as the second value, the terminal belongs to a tag range in which inventory is performed. On the contrary, that the first status identifier does not match the second status identifier indicates that the network side expects to perform inventory on the terminal whose location does not change, but the status identifier on the terminal indicates that the location changes, and the terminal does not belong to a tag range in which inventory is performed.

Optionally, Example 1 (1) and Example 1 (2) may be used separately or may be used in combination. For example, when Example 1 (1) and Example 1 (2) are used in combination, the first status identifier includes a plurality of bits, where some bits in the plurality of bits indicate the first location information, and a remaining bit indicates that inventory is performed on the terminal whose location changes (or whose location does not change). Optionally, the plurality of bits in the first status identifier are the first location information.

Example 2: The terminal has an identifier reading capability.

The inventory operation includes a data read operation.

In S303, the terminal may determine, depending on whether a first read identifier matches a second read identifier, whether to respond to the inventory operation.

Example 2 (1): The first status identifier includes a first read identifier corresponding to the data in the first area. In other words, a first status indicates that inventory is performed on the data of the first read identifier in the first area. The second status identifier includes a second read identifier corresponding to the data in the first area, and the first area is a data storage area of the to-be-read data.

The read identifier on the terminal may indicate that the data has been read, or indicate that the data has not been read. For example, if the read identifier is set to 1 (or 0), it indicates that the data has been read; or if the read identifier is set to 0 (or 1), it indicates that the data has not been read. If the first read identifier is 1, it may be considered that the network side expects to perform repeated inventory on the data that has been read. If the first read identifier is 0, it may be considered that the network side expects to perform inventory on the data that has not been read.

Optionally, the first message may further include information about the first area.

Optionally, if the terminal accesses a network for the 1^{st} time, the terminal usually does not store the read identifier of the data in the first area. In this case, the terminal usually responds to the inventory operation, and the information about the first area and/or the first read identifier may not be carried in the first message.

When the first read identifier matches the second read identifier, or when the first read identifier is consistent with the second read identifier, it indicates that the data in the first area is reported in a current round of reading. Therefore, the terminal may respond to the inventory operation.

When the first read identifier does not match the second read identifier, or when the first read identifier is inconsistent with the second read identifier, it indicates that the data in the first area is not reported in a current round of reading. Therefore, the terminal may not respond to the inventory operation. This helps reduce a waste of network resources.

For example, the terminal may directly perform consistency comparison between the first read identifier and the second read identifier, to determine whether the first read identifier matches the second read identifier.

For another example, the terminal may determine, by using a specific algorithm, whether the first read identifier matches the second read identifier. For example, the terminal may perform an AND operation or an exclusive OR operation on the first read identifier and the second read identifier, and determine, based on an operation result, whether the first read identifier matches the second read identifier.

For example, when determining whether the first read identifier matches the second read identifier, the terminal may perform the exclusive OR operation on the first read identifier and the second read identifier; and if the result of the exclusive OR operation is 0, the terminal determines that the first read identifier matches the second read identifier; or if the result is 1, the terminal determines that the first read identifier does not match the second read identifier.

Example 2 (2): The second status identifier on the terminal may indicate changed data in the first area, or indicate unchanged data in the first area, where the first area is a data storage area of the to-be-read data.

For example, if the status identifier is set to 1 (or 0), it indicates that the data in the first area changes; or if the status identifier is set to 0 (or 1), it indicates that the data in the first area remains unchanged.

If the first status identifier is 1, it may be considered that the network side expects to perform inventory on the changed data. When the first status identifier matches the second status identifier, or when the first status identifier is consistent with the second status identifier, it indicates that the data in the first area changes, in other words, the data in the first area is reported in a current round of reading. Therefore, the terminal may respond to the inventory operation. When the first status identifier does not match the second status identifier, or when the first status identifier is inconsistent with the second status identifier, it indicates that the network side expects to read the changed data, but the data in the first area on the terminal remains unchanged, in other words, the data in the first area does not meet a matching condition in a current round of reading, and does not need to be reported. Therefore, the terminal may not respond to the inventory operation. This helps reduce a waste of network resources.

If the first read identifier is 0, it may be considered that the network side expects to perform inventory on the unchanged data. When the first status identifier matches the second status identifier, or when the first status identifier is consistent with the second status identifier, it indicates that the data in the first area remains unchanged, in other words, the data in the first area is reported in a current round of reading. Therefore, the terminal may respond to the inventory operation. When the first status identifier does not match the second status identifier, or when the first status identifier is inconsistent with the second status identifier, it indicates that the network side expects to read the unchanged data, and the data in the first area on the terminal changes, in other words, the data in the first area is not reported in a current round of reading. Therefore, the terminal may not respond to the inventory operation. This helps reduce a waste of network resources.

A process of determining whether the first status identifier matches the second status identifier is similar to the process of determining whether the first read identifier matches the second read identifier in Example 2 (1), and details are not described herein again.

In a possible implementation, if determining to respond to the inventory operation, the terminal may receive a third message, where the third message carries read operation indication information, and the read operation indication information indicates to read data in the first area; and the terminal reports the read data. Optionally, the third message may further include information about the first area and/or the first read identifier corresponding to the data in the first area.

Optionally, if the second read identifier corresponding to the data in the first area on the terminal indicates that the data has not been read, after reading the data, the terminal may modify a second read record identifier to indicate that the data has been read, for example, set the second read record identifier to 1.

Optionally, if determining to respond to the inventory operation, the terminal may further report a terminal identifier of the terminal. The terminal identifier may be carried in a second response message, and be for notifying the management network element or the access network element of a terminal that responds to the inventory operation.

Optionally, Example 2 (1) and Example 2 (2) may be used separately or may be used in combination. For example, when Example 2 (1) and Example 2 (2) are used in combination, the first status identifier includes a plurality of bits, where some bits in the plurality of bits indicate that inventory is performed on data of the first read identifier in the first area, and a remaining bit indicates that inventory is performed on data whose read identifier changes in the first area (or whose read identifier remains unchanged in the first area).

Example 3: The terminal has an abnormality alarm capability.

The inventory operation includes a data read operation. The first status identifier includes a first abnormality record identifier corresponding to data in a second area. In other words, the first status identifier indicates that inventory is performed on the data of the first abnormality record identifier in the second area. The second status identifier includes a second abnormality record identifier corresponding to the data in the second area, and the second area is a data storage area of monitoring data.

In S303, the terminal may determine, based on the first abnormality record identifier and the second abnormality record identifier, whether to respond to the inventory operation.

Optionally, the first message may further include information about the second area. If the terminal accesses a network for the 1^{st} time, the terminal usually does not store the abnormality record identifier corresponding to the data in the second area. In this case, the terminal usually responds to the inventory operation, and the information about the second area and/or the first abnormality record identifier may not be carried in the first message.

For example, if the abnormality record identifier is set to 1 (or 0), it indicates abnormality; or if the abnormality record identifier is set to 0 (or 1), it indicates normality.

If the first abnormality record identifier is 1, it may be considered that the network side expects to perform inventory on abnormal data. When the first abnormality record identifier matches the second abnormality record identifier, or when the first abnormality record identifier is consistent with the second abnormality record identifier, it indicates that there is the abnormal data in the second area, in other words, the data in the second area is reported in a current round of reading. Therefore, the terminal may respond to the inventory operation. When the first abnormality record identifier does not match the second abnormality record identifier, or when the first abnormality record identifier is inconsistent with the second abnormality record identifier, it indicates that there is no abnormal data in the second area, in other words, the data in the second area is not reported in a current round of reading. Therefore, the terminal may not respond to the inventory operation. This helps reduce a waste of network resources.

If the first abnormality record identifier is 0, it may be considered that the network side expects to perform inventory on normal data. When the first abnormality record identifier matches the second abnormality record identifier, or when the first abnormality record identifier is consistent with the second abnormality record identifier, it indicates that there is the normal data in the second area, in other words, the data in the second area is reported in a current round of reading. Therefore, the terminal may respond to the inventory operation. When the first abnormality record identifier does not match the second abnormality record identifier, or when the first abnormality record identifier is inconsistent with the second abnormality record identifier, it indicates that there is no normal data in the second area, in other words, the data in the second area is not reported in a current round of reading. Therefore, the terminal may not respond to the inventory operation. This helps reduce a waste of network resources.

For example, the terminal may directly perform consistency comparison between the first abnormality record identifier and the second abnormality record identifier, to determine whether the first abnormality record identifier matches the second abnormality record identifier.

For another example, the terminal may determine, by using a specific algorithm, whether the first abnormality record identifier matches the second abnormality record identifier. For example, the terminal may perform an AND operation or an exclusive OR operation on the first abnormality record identifier and the second abnormality record identifier, and determine, based on an operation result, whether the first abnormality record identifier matches the second abnormality record identifier.

For example, when determining whether the first abnormality record identifier matches the second abnormality record identifier, the terminal may perform the exclusive OR operation on the first abnormality record identifier and the second abnormality record identifier; and if the result of the exclusive OR operation is 0, the terminal determines that the first abnormality record identifier matches the second abnormality record identifier; or if the result is 1, the terminal determines that the first abnormality record identifier does not match the second abnormality record identifier.

In a possible implementation, if determining to respond to the inventory operation, the terminal may receive a fourth message, where the fourth message carries read operation indication information, and the read operation indication information indicates to read data in the second area; and the terminal reports the read data. Optionally, the fourth message may further include the information about the second area and/or the first abnormality record identifier corresponding to the data in the second area.

Optionally, if determining to respond to the inventory operation, the terminal may further report a terminal identifier of the terminal. The terminal identifier may be carried in a third response message, and be for notifying the management network element or the access network element of a terminal that responds to the inventory operation.

Optionally, the terminal reads the monitoring data in the second area, and when the monitoring data meets a first data range, the terminal identifies a second abnormality record corresponding to the data in the second area as abnormality, for example, sets the second abnormality record identifier to 1.

In a possible implementation, the terminal may further start a random access procedure, and the terminal may return a response message by using the random access procedure.

In a possible implementation, the terminal may further determine, based on a scenario, a value of the second status identifier, to match a value condition sent by the network side. For example, in a location information writing scenario, the value of the second status identifier may be a value of second location information. For example, the second location information may include one or more of a TAC, a cell ID, or a base station ID of a location of the terminal. For another example, in a location change scenario, the value of the second status identifier may be a value (for example, but not limited to 1) for location changing, or a value (for example, but not limited to 0) indicating that a location does not change. For another example, in a data reading scenario, the value of the second status identifier may be a value (for example, but not limited to 1) indicating that the data has been read, or a value (for example, but not limited to 0) indicating that the data has not been read. For another example, in an abnormality monitoring scenario, the value of the first status identifier may be a value (for example, but not limited to 1) indicating abnormal data, or a value (for example, but not limited to 0) indicating normality.

FIG. 4 is a diagram of a communication method, including the following steps.

S401: A management network element obtains capability information of a terminal, where the capability information of the terminal indicates an inventory operation supported by the terminal.

S402: The management network element sends a fifth message based on the capability information of the terminal, where the fifth message includes a first status identifier of a data storage area.

Optionally, in S402, the management network element may transparently transmit the fifth message via an access network element. The fifth message herein and the foregoing first message may be a same message. Alternatively, the management network element may send the fifth message to an access network element, and the access network element sends a first message based on the fifth message. The fifth message herein and the foregoing first message may be different messages.

Optionally, the fifth message may further include a range of terminals on which the inventory operation is to be performed.

In a possible implementation, the management network element may further determine a value of the first status identifier based on a current scenario, to obtain a terminal that meets a value condition for response. Related descriptions are separately described in the following examples.

Example 1: The capability information of the terminal indicates that the terminal has a location information writing capability.

Example 1 (1): The inventory operation includes a location information write operation, and the first status identifier indicates first location information.

The current scenario includes a location information writing scenario, and the value of the first status identifier may be a value of the first location information. For example, the first location information may include one or more of a TAC, a cell ID, or a base station ID configured within coverage of a base station. For another example, the first location information may include one or more of a TAC, a cell ID, or a base station ID that is not within coverage of a base station.

Optionally, the management network element may further determine the first location information based on the value of the first status identifier, and then deliver the first location information to the terminal.

Example 1 (2): The inventory operation includes a location information write operation, and the first status identifier indicates that inventory is performed on a terminal whose location changes or indicates that inventory is performed on a terminal whose location does not change.

The current scenario includes a location change scenario, and the value of the first status identifier may be a value (for example, but not limited to 1) indicating that inventory is performed on the terminal whose location changes, or a value (for example, but not limited to 0) indicating that inventory is performed on the terminal whose location does not change.

Optionally, the fifth message may further include indication information for obtaining a location, and the indication information may indicate a granularity of the obtained location, for example, a TAC granularity.

In a possible implementation, the management network element may further receive an inventory request message, where the inventory request message includes one or more of the following: a range of terminals on which the inventory operation is to be performed, a periodicity for performing the inventory operation, the indication information for obtaining the location, and a range of access network elements on which the inventory operation is to be performed. Optionally, the inventory request message may be sent by an application network element to the management network element. Optionally, the management network element may periodically trigger the inventory operation based on the periodicity.

In a possible implementation, the management network element may further send a second message, where the second message carries write operation indication information and the to-be-written first location information. If the terminal determines not to respond to the inventory operation, a process of sending the second message may be omitted. Optionally, the management network element may further receive a first response message, and send the second message based on the first response message.

Example 2: The capability information of the terminal indicates that the terminal has an identifier reading capability.

The inventory operation includes a data read operation.

Example 2 (1): The first status identifier includes a first read identifier corresponding to data in a first area, the first status identifier indicates that inventory is performed on the data of the first read identifier in the first area, and the first area is a data storage area of to-be-read data.

The current scenario includes a data reading scenario, and the value of the first status identifier may be a value (for example, but not limited to 1) indicating that inventory is performed on read data, and indicate that repeated inventory is performed on the read data; or the value of the first status identifier may be a value (for example, but not limited to 0) indicating that inventory is performed on data that has not been read, and indicate that inventory is performed, for the 1^{st} time, on the data that has not been read.

Example 2 (2): The first status identifier may indicate that inventory is performed, in a first area, on data whose read identifier changes, or indicate that inventory is performed, in the first area, on data whose read identifier remains unchanged, where the first area is a data storage area of to-be-read data.

In a possible implementation, the management network element may further receive an inventory request message, where the inventory request message includes one or more of the following: a range of terminals on which the inventory operation is to be performed, a periodicity for performing the inventory operation, information about the first area, and a range of access network elements on which the inventory operation is to be performed. Optionally, the inventory request message may be sent by an application network element to the management network element.

In a possible implementation, the management network element may further send a third message, where the third message carries read operation indication information, and the read operation indication information indicates to read data in the first area. If the terminal determines not to respond to the inventory operation, a process of sending the third message may be omitted. Optionally, the management network element may further receive a second response message, and send a second message based on the second response message.

Optionally, the third message may further include the information about the first area and/or a first read identifier corresponding to the data in the first area.

Optionally, the fifth message may further include the information about the first area.

Example 3: The capability information of the terminal indicates that the terminal has an abnormality alarm capability.

The inventory operation includes a data read operation. The first status identifier includes a first abnormality record identifier corresponding to data in a second area. In other words, the first status identifier indicates that inventory is performed on the data of the first abnormality record identifier in the second area. The second area is a data storage area of monitoring data.

The current scenario includes an abnormality monitoring scenario, and the value of the first status identifier may be a value (for example, but not limited to 1) indicating that inventory is performed on abnormal data, and indicate that inventory is performed on abnormal monitoring data; or the value of the first status identifier may be a value (for example, but not limited to 0) indicating that inventory is performed on normal data, and indicate that statistics on normal monitoring data collected by the terminal is collected.

In a possible implementation, the management network element may further receive an inventory request message, where the inventory request message includes one or more of the following: a range of terminals on which the inventory operation is to be performed, a periodicity for performing the inventory operation, information about the second area, and a range of access network elements on which the inventory operation is to be performed.

In a possible implementation, the management network element may further send a fourth message, where the fourth message carries read operation indication information, and the read operation indication information indicates to read data in the second area. If the terminal determines not to respond to the inventory operation, a process of sending the fourth message may be omitted. Optionally, the management network element may further receive a third response message, and send the fourth message based on a first response message.

Optionally, the fourth message may further include the information about the second area and/or the first abnormality record identifier corresponding to the data in the second area.

Optionally, the fifth message may further include information about the first area.

Optionally, the management network element may further receive the monitoring data reported by the terminal, and when the monitoring data meets a second value range, the management network element may perform a terminal damage alarm. When the monitoring data meets the second value range, it may be considered that the terminal (used as a sensor for collecting the monitoring data) is abnormal or damaged.

A first value range is usually different from the second value range. Specific values of the first value range and the second value range are not limited in this embodiment of this application.

FIG. 5 is a diagram of a communication method, including the following steps.

S501: An access network element receives a fifth message, where the fifth message includes a first status identifier of a data storage area.

S502: The access network element sends a first message based on the fifth message, where the first message includes the first status identifier of the data storage area.

In a possible implementation, the access network element may obtain capability information of a terminal, and then send the first message based on the capability information of the terminal. For a specific process, refer to the operations of the management network element in FIG. 4. Details are not described herein again.

In some scenarios, the access network element may implement a function of the management network element. For the function of the access network element, refer to the management network element. Similarities are not described herein again.

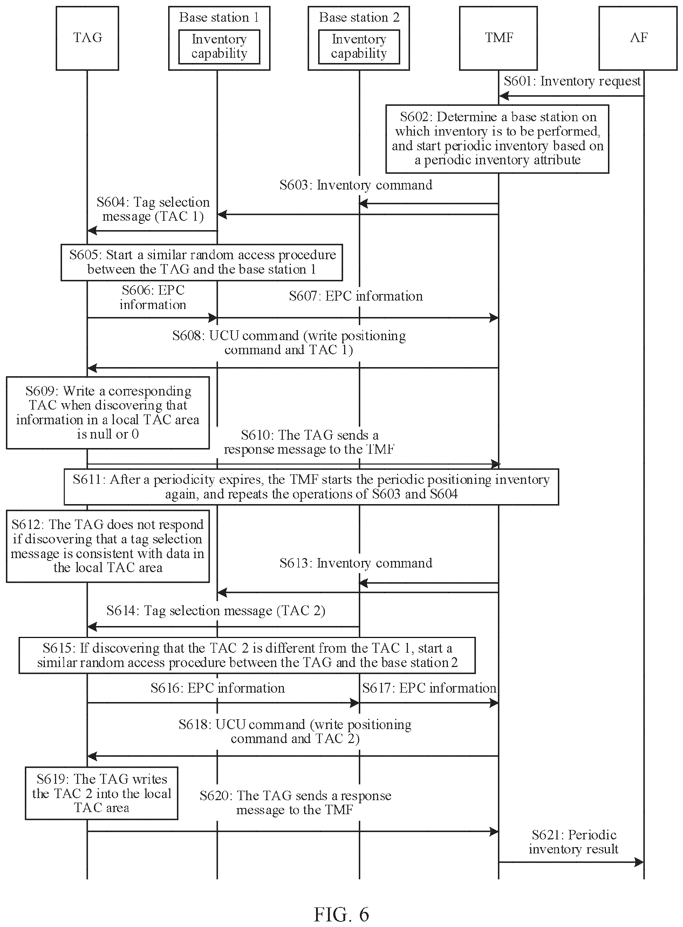

Based on embodiments shown in FIG. 3 to FIG. 5, the following describes the communication method provided in embodiments of this application by using specific embodiments in FIG. 6 to FIG. 8. Steps in FIG. 6 to FIG. 8 and FIG. 3 to FIG. 5 may be mutually referenced, and terms and concepts may also be mutually referenced.

Embodiment 1: A TAG has a location information writing capability.

FIG. 6 shows a communication process. Location information is, for example, a TAC, the TAG supports TAC writing, and a TMF may obtain TAG capability information (to be specific, a data area that supports the TAC writing) in advance. The communication process includes the following steps.

S601: An AF sends an inventory request to the TMF.

The inventory request includes a tag object on which inventory is to be performed (for example, a value of a TID or an EPC range), a periodic inventory attribute (indicating to perform periodic inventory), an indication of obtaining location information of a tag, for example, a coarse-grained positioning requirement of the tag (to be specific, requiring to carry a TAC of a base station in which a reader/writer corresponding to each tag is located), and information about a geographical area to which the tag object belongs (for example, a range of the base station).

The tag object on which inventory is to be performed is an example of the foregoing range of the terminals on which the inventory operation is to be performed, the periodic inventory attribute is an example of the foregoing periodicity for performing the inventory operation, the coarse-grained positioning requirement of the tag is an example of the foregoing indication information for obtaining the location, and the information about the geographical area is an example of the foregoing range of the access network elements on which the inventory operation is to be performed.

S602: The TMF determines, based on the information about the geographical area of the tag, (one or more) base stations on which inventory is to be performed, and starts the periodic inventory based on the periodic inventory attribute.

For example, the base stations on which inventory is to be performed include a base station 1 and a base station 2.

S603: The TMF separately sends an inventory command to the base station 1 and the base station 2.

The inventory command carries the tag object on which inventory is to be performed and the indication of obtaining the location information of the tag, for example, coarse-grained positioning requirement information.

S604: The base station 1 sends a tag selection message to the TAG.

Optionally, the base station 1 includes a TAC (for example, a TAC 1) of the base station in tag selection information based on the coarse-grained positioning requirement, so that the TAG compares TAC information of the base station with TAC information written locally. For example, when the TAG accesses a network for the 1^{st} time, the tag selection information may not carry the TAC.

S605: The TAG discovers, based on the tag selection message of the base station 1, that the TAG meets a tag selection range, when the base station sends a round of query (Query) inventory, the TAG determines, based on a random probability, a tag to be replied with and sends a random number of the TAG to the base station, and the base station replies with the random number. This is similar to a process of a random access procedure. To be specific, if the TAG matches a condition for tag selection, a similar random access procedure is started between the TAG and the base station 1.

S606: The TAG on which random number confirmation is performed (or whose random access succeeds) sends EPC information of the TAG to the base station 1.

In S606, the TAG whose random access succeeds includes the EPC information in a message similar to a registration request, and sends the message to the TMF via the base station.

S607: The base station 1 sends the EPC information of the TAG to the TMF.

When the base station transparently transmits the message sent by the TAG to the TMF, the message may optionally carry information about an approximate location of the TAG detected by the base station 1, where the information includes but is not limited to location information such as TAC 1 information, ID information of the base station, and cell ID information, and the message is sent to the TMF.

S608: The TMF sends a message of a write positioning command of a configuration update (UE configuration update, UCU) command to the TAG, where the message carries the information (for example, but not limited to, the TAC 1) about the location of the TAG.

S609: When discovering that information in a local TAC area is null or 0, the TAG writes a corresponding TAC.

Herein, it may be further understood as that the TAG further has a TAC comparison capability.

S610: The TAG sends a response message to the TMF, to indicate that the TAC 1 has been written.

Therefore, the TMF confirms that the TAG may be reachable by the base station 1.

S611: After the periodicity expires, the TMF starts periodic positioning inventory again, and repeats the operations of S603 and S604.

S612: When receiving the tag selection information carrying the TAC, the TAG performs TAC information comparison in the local TAC area, and does not respond if discovering that the tag selection information is consistent with data in the local TAC area.

S613: When base station information received by the TAG changes, the TMF sends an inventory command to a plurality of base stations.

For example, the inventory command is sent to the base station 1 and the base station 2 separately.

S614: The base station 2 sends, to the TAG, a tag selection message carrying a TAC 2.

In the step, inventory on the TAG on which inventory is originally performed by the base station 1 is performed by the base station 2, and the TAG may move from the base station 1 to the base station 2.

S615: The TAG compares the received TAC 2 with the TAC 1 in the local TAC area, and if discovering that the TAC 2 is different from the TAC 1, starts a similar random access procedure between the TAG and the base station 2.

For S616 and S617, refer to S606 and S607.

A difference lies in that S616 and S617 are performed by the base station 2.

S618: The TMF sends a message of a write positioning command of a UCU command to the TAG, where the message carries the information (for example, but not limited to, the TAC 2) about the location of the TAG.

S619: The TAG writes the TAC 2 into the local TAC area.

S620: The TAG sends a response message to the TMF, to indicate that the TAC 2 has been written.

S621: The TMF uniformly reports a periodic inventory result to the AF.

The periodic inventory result may include indication information indicating whether TAC information stored in the TAG changes, and/or TAC information currently stored in the TAG.

In this embodiment of this application, flexible response can be implemented by using TAC writing and comparison capabilities of the TAG, to reduce repeated data reporting of the TAG to a core network, improve scalability of the core network, and save network resources.

Embodiment 2: A TAG has a data reading capability.

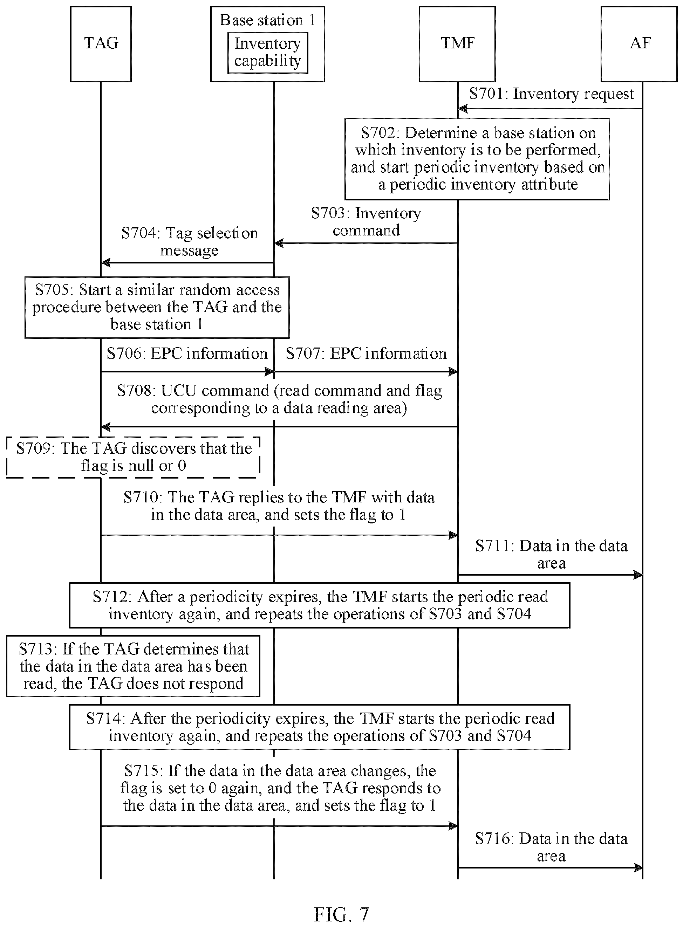

FIG. 7 shows a communication process. The TAG supports data reading, and a TMF may obtain TAG capability information (to be specific, which data area supports reading of which data, and which flag is for identifying a reading record of the data) in advance. The communication process includes the following steps.

S701: An AF sends an inventory request to the TMF.

The inventory request includes a tag object on which inventory is to be performed (for example, a value of a TID or an EPC range), a periodic inventory attribute (indicating to perform periodic inventory), a data reading area, and information about a geographical area to which the tag object belongs (for example, a range of a base station). The data reading area is an example of the foregoing first area.

S702: The TMF determines, based on the information about the geographical area of the tag, (one or more) base stations on which inventory is to be performed, and starts the periodic inventory based on the periodic inventory attribute.

For example, the base station on which inventory is to be performed includes a base station 1.

S703: The TMF sends an inventory command to the base station 1.

The inventory command carries a range of tag objects on which inventory is to be performed. For example, a tag whose read/write flag corresponding to a data area is null, 0, or 1 is read. If the read/write flag is 0 (or 1), it indicates that the read/write flag is not set, and it indicates that data in the data area has not been read before; or if the read/write flag is 1 (or 0), it indicates that the read/write flag is set, and it indicates that data in the data area has been read.

S704: The base station 1 sends a tag selection message to the TAG.

Optionally, the base station 1 selects, based on matching (for example, mask matching or determined value matching (where the foregoing read/write flag is 0 or 1)) of read/write flags corresponding to the range of the tag objects, a TAG that meets a matching condition.

When a plurality of data areas on a same TAG are readable, different data areas have different flags to perform matching and identification in corresponding areas.

S705: If the TAG matches a condition for tag selection, start a similar random access procedure between the TAG and the base station 1.

S706: The TAG whose random access succeeds sends EPC information of the TAG to the base station 1.

In S706, the TAG whose random access succeeds includes the EPC information in a message similar to a registration request, and sends the message to the TMF via the base station.

S707: The base station 1 sends the EPC information of the TAG to the TMF.

S708: The TMF sends a message of a read command of a UCU command to the TAG, where the message optionally carries a storage area location and a start storage bit location of data in a to-be-read data area of the TAG, and a length of a read character, for example, a length of a bit string, and may further carry a flag corresponding to the reading area.

S709: The TAG discovers that the flag corresponding to the data area is null or 0.

S709 is an optional step.

S710: The TAG replies to the TMF with data in the data area, and sets the flag corresponding to the data area to 1.

S711: The TMF sends the data in the data area to the AF.

S712: After the periodicity expires, the TMF starts periodic read inventory again, still uses the value 0 or the null value to select the tag range, and repeats operations of S703 and S704.

S713: If the TAG determines that the flag corresponding to the data area has changed and is set to 1, that is, the data in the data area has been read, the TAG does not respond.

S714: After the periodicity expires, the TMF starts the periodic read inventory again, and repeats the operations of S703 and S704.

S715: If the data in the data area changes, the flag corresponding to the data area is set to 0 again, and the TAG responds to the data in the data area, and sets the flag corresponding to the data area to 1.

Alternatively, the TAG may repeat steps S705 to S710.

For a process of S716, refer to S711.

In this embodiment of this application, flexible response can be implemented by using the data reading capability of the TAG, to reduce repeated data reporting of the TAG to a core network, improve scalability of the core network, and save network resources.

Embodiment 3: A TAG has an abnormality alarm capability.

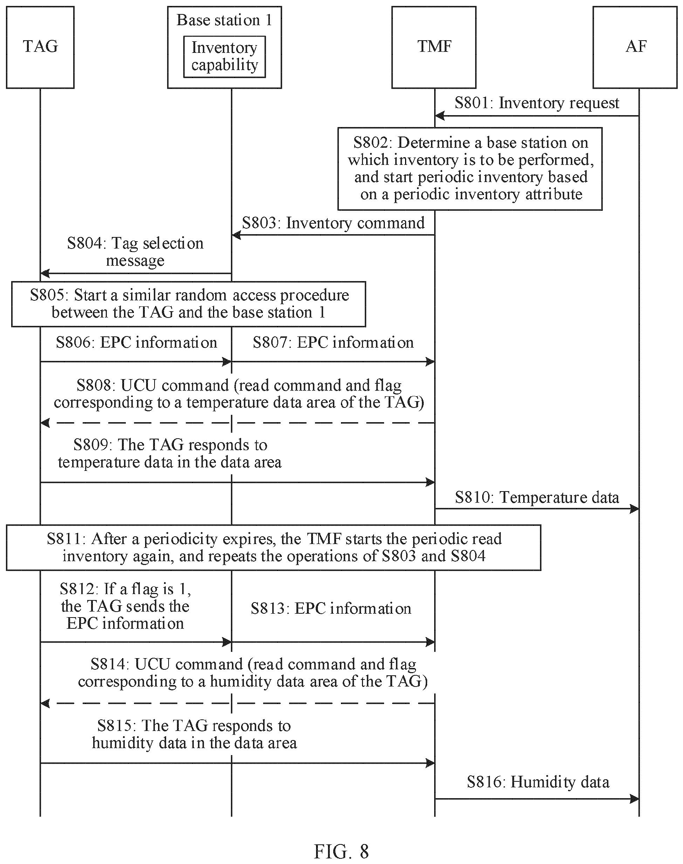

FIG. 8 shows a communication process. The TAG has an information writing capability of sensor data and supports an abnormal alarm. When one TAG supports data sensing and writing in a plurality of data areas, each data area is identified by using a corresponding abnormal flag (namely, the foregoing abnormality record identifier). The TMF may obtain TAG capability information (to be specific, which data area supports sensing and writing of which data, and which abnormal flag is for identifying a threshold alarm of the data) in advance. The communication process includes the following steps.

S801: An AF sends an inventory request to the TMF.

The inventory request includes a tag object on which inventory is to be performed (for example, a value of a TID or an EPC range), a periodic inventory attribute (indicating to perform periodic inventory), a monitored data area, and information about a geographical area to which the tag object belongs (for example, a range of a base station). The monitored data area is an example of the foregoing second area.

S802: The TMF determines, based on the information about the geographical area of the tag, (one or more) base stations on which inventory is to be performed, and starts the periodic inventory based on the periodic inventory attribute.

S803: The TMF sends an inventory command to a base station 1.

The inventory command carries a range of tag objects on which inventory is to be performed. For example, if the abnormal flag is 1 (or 0), it indicates that data in the data area is abnormal; or if the abnormal flag is 0 (or 1), it indicates that data in the data area is normal.

S804: The base station 1 sends a tag selection message to the TAG, where the select tag message carries the abnormal flag, for example, 1, to perform selection and matching on a tag with data abnormality.

Optionally, the base station 1 selects a TAG based on matching (for example, mask matching or determined value matching (where the foregoing abnormal flag is 0 or 1)) of read/write flags corresponding to the range of the tag objects.

S805: The TAG starts a similar random access procedure between the TAG and the base station 1 based on the tag selection message of the base station 1 if a condition for tag selection is matched.

Optionally, the TAG is a TAG that is selected by the base station 1 and whose abnormal flag is set to 1 to indicate data abnormality.

S806: The TAG sends EPC information of the TAG to the base station 1.

In S806, the TAG whose random access succeeds includes the EPC information in a message similar to a registration request, and sends the message to the TMF via the base station.

Optionally, in S806, information about an abnormal flag of temperature data in the data area may be further carried, or the abnormal data is directly sent to the TMF via the base station.

S807: The base station 1 sends the EPC information of the TAG to the TMF.

S808: The TMF sends a message of a read command of a UCU command to the TAG, where the message carries the flag of the data in the (temperature) data area of the TAG.

S808 is an optional step. Optionally, the UCU command further carries a storage area location and a start storage bit location of data in a to-be-read data area of the TAG.

When a plurality of data areas on a same TAG are readable, different data areas have different flags to perform matching and identification in corresponding areas.

S809: The TAG responds to data whose value is 1 in the data area, for example, temperature data.

For example, a flag corresponding to a temperature data area carried in the UCU command is 1 (abnormal), and the TAG responds to abnormal temperature data.

S810: The TMF sends the temperature data in the data area to the AF.

S811: After the periodicity expires, the TMF starts periodic read inventory again, and repeats the operations of S803 and S804.

If all flags of the temperature data in the data area of the TAG are 0 (normal), S805 and S806 may be omitted after this step.

S812: If a flag of humidity data in the data area is 1, the TAG sends the EPC information of the TAG to the base station 1.

In S813, the TAG whose random access succeeds includes the EPC information in a message similar to the registration request, and sends the message to the TMF via the base station.

Optionally, in S813, the flag of the humidity data in the data area, an identifier of the data area, and (abnormal) humidity data in the data area may further be sent to the TMF via the base station.

S813: The base station 1 sends the EPC information of the TAG to the TMF.

S814: The TMF sends a message of a read command of a UCU command to the TAG, where the message carries information about the (humidity) data area of the TAG.

Similar to S808, S814 may be an optional step.

S815: The TAG responds to the humidity data in the data area.

For example, a flag carried in the UCU command is 1 (abnormal), and the TAG responds to the abnormal humidity data.

S816: The TMF sends the humidity data in the data area to the AF.

If the (abnormal) humidity data in the data area meets a second data range, the TMF may perform alarm rating of a corresponding TAG based on the obtained data information. For example, if a temperature and humidity exceed 200% of a normal value, the tag is rated as damaged, and the like.

In this embodiment of this application, flexible response can be implemented by using a data reading capability of the TAG, to reduce repeated data reporting of the TAG to a core network, improve scalability of the core network, and save network resources.

It may be understood that, in different scenarios, a same (or different) "identifier" or "flag" in embodiments of this application may represent different meanings. It should be noted that the foregoing embodiments may be used separately, or may be used in combination.

The terms "system" and "network" may be used interchangeably in embodiments of this application. In descriptions of embodiments of this application, the term "and/or" describes an association relationship between associated objects and indicates that three relationships may exist. For example, A and/or B may indicate the following three cases: Only A exists, both A and B exist, and only B exists. The character "/" usually indicates an "or" relationship between the associated objects. In this application, "at least one" means one or more, and "a plurality of" means two or more. In addition, it should be understood that, in the description of this application, the terms "first", "second", "third", and the like are merely intended for distinguishing a purpose of description and shall not to be understood as indication or implication of relative importance, or indication or implication of order. Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner. The method and the apparatus are based on a same technical concept or similar technical concepts. Because problem-resolving principles of the method and the apparatus are similar, mutual reference may be made to implementation of the apparatus and the method, and repeated parts are not described.

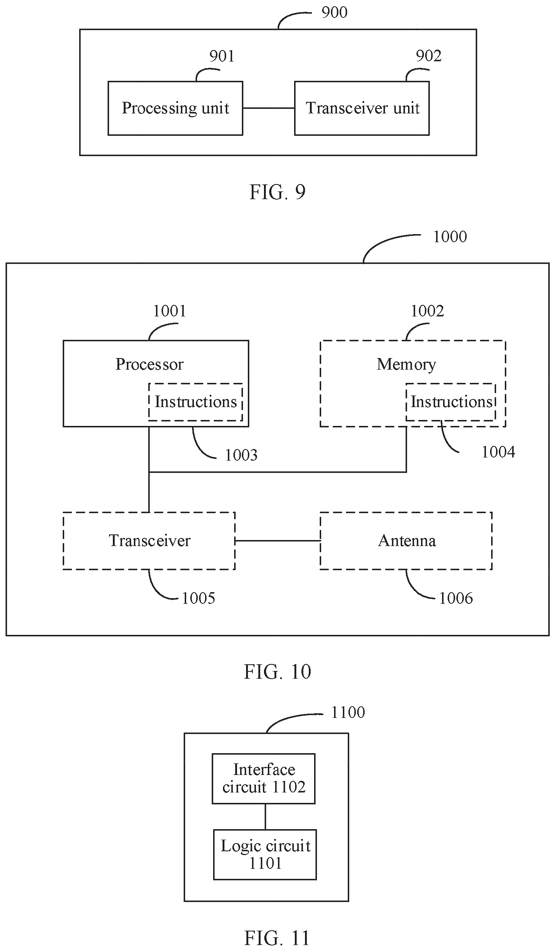

Based on a same technical concept as the foregoing communication method, an embodiment of this application further provides a communication apparatus. As shown in FIG. 9, the communication apparatus 900 includes a processing unit 901 and a transceiver unit 902. Optionally, a function implemented by the transceiver unit 902 may be implemented by a communication interface, and the transceiver unit 902 may be integrated by a receiving unit and a sending unit. The communication apparatus 900 may be a terminal, an access network element, or a management network element, or may be located in a terminal, an access network element, or a management network element. The communication apparatus 900 may be configured to implement the methods described in the foregoing method embodiments. For example, the communication apparatus 900 can perform the steps performed by the terminal, the access network element, or the management network element in the methods in FIG. 3 to FIG. 8.

In a possible embodiment, the communication apparatus 900 is used in the terminal.

For example, the transceiver unit 902 is configured to receive a first message, where the first message includes a first status identifier of a data storage area.

The processing unit 901 is configured to: store a second status identifier of the storage area, and determine, based on the first status identifier and the second status identifier, whether to respond to an inventory operation. Optionally, the step of storing the second status identifier may be implemented on a storage unit.

In an implementation, the status identifier includes at least one of the following: an identifier indicating location information, a read identifier corresponding to data in the data storage area, or an abnormality record identifier corresponding to the data in the data storage area.

In an implementation, the communication apparatus 900 has a location information writing capability, the inventory operation includes a location information write operation, the first status identifier indicates first location information, and the second status identifier indicates second location information.

In an implementation, the processing unit 901 is specifically configured to: determine whether the first location information matches the second location information; and if the first location information matches the second location information, determine not to respond to the inventory operation; or if the first location information does not match the second location information, determine to respond to the inventory operation.

In an implementation, the processing unit 901 is specifically configured to: perform an exclusive OR operation on the first location information and the second location information; and if a bit that is 1 exists in a result of the exclusive OR operation, determine that the first location information does not match the second location information; or if all bits in the result are 0, determine that the first location information matches the second location information.

In an implementation, the transceiver unit 902 is further configured to: if determining to respond to the inventory operation, send a first response message; and receive a second message, where the second message carries write operation indication information and the to-be-written first location information.

The processing unit 901 is further configured to write the first location information based on the write operation indication information.

In an implementation, the location information includes at least one of a TAC, a cell identifier, or a base station identifier.

In an implementation, the communication apparatus 900 has an identifier reading capability, the inventory operation includes a data read operation, the first status identifier includes a first read identifier corresponding to data in a first area, the first area is a data storage area of to-be-read data, and the second status identifier includes a second read identifier corresponding to the data in the first area.

In an implementation, the processing unit 901 is specifically configured to: determine whether the first read identifier matches the second read identifier; and if the first read identifier matches the second read identifier, determine to respond to the inventory operation; or if the first read identifier does not match the second read identifier, determine not to respond to the inventory operation.

In an implementation, the processing unit 901 is specifically configured to: perform an exclusive OR operation on the first read identifier and the second read identifier; and if a result of the exclusive OR operation is 0, determine that the first read identifier matches the second read identifier; or if the result is 1, determine that the first read identifier does not match the second read identifier.

In an implementation, the transceiver unit 902 is further configured to: if determining to respond to the inventory operation, receive a third message, where the third message carries read operation indication information, and the read operation indication information indicates to read data in the first area; and reply with the read data.

In an implementation, the communication apparatus 900 has an abnormality alarm capability, the inventory operation includes a data read operation, the first status identifier includes a first abnormality record identifier corresponding to data in a second area, the second area is a data storage area of monitoring data, and the second status identifier includes a second abnormality record identifier corresponding to the data in the second area.

In an implementation, the processing unit 901 is specifically configured to: determine whether the first abnormality record identifier matches the second abnormality record identifier; and if the first abnormality record identifier matches the second abnormality record identifier, determine to respond to the inventory operation; or if the first abnormality record identifier does not match the second abnormality record identifier, determine not to respond to the inventory operation.

In an implementation, the processing unit 901 is specifically configured to: perform an exclusive OR operation on the first abnormality record identifier and the second abnormality record identifier; and if a result of the exclusive OR operation is 0, determine that the first abnormality record identifier matches the second abnormality record identifier; or if the result is 1, determine that the first abnormality record identifier does not match the second abnormality record identifier.

In an implementation, the transceiver unit 902 is further configured to: if determining to respond to the inventory operation, receive a fourth message, where the fourth message carries read operation indication information, and the read operation indication information indicates to read data in the second area; and reply with the read data.

In another possible embodiment, the communication apparatus 900 is used in the management network element.

For example, the transceiver unit 902 is configured to obtain capability information of a terminal, where the capability information of the terminal indicates an inventory operation supported by the terminal.

The processing unit 901 is configured to generate a fifth message based on the capability information of the terminal.

The transceiver unit 902 is further configured to send the fifth message, where the fifth message includes a first status identifier of a data storage area.

In an implementation, the status identifier includes at least one of the following: an identifier indicating location information, a read identifier corresponding to data in the data storage area, or an abnormality record identifier corresponding to the data in the data storage area.

In an implementation, the capability information of the terminal indicates that the terminal has a location information writing capability, the inventory operation includes a location information write operation, and the first status identifier indicates first location information.

In an implementation, the transceiver unit 902 is further configured to send a second message, where the second message carries write operation indication information and the to-be-written first location information.

In an implementation, the transceiver unit 902 is further configured to receive an inventory request message, where the inventory request message includes a range of terminals on which the inventory operation is to be performed, a periodicity for performing the inventory operation, indication information for obtaining a location, and a range of access network elements on which the inventory operation is to be performed.

In an implementation, the capability information of the terminal indicates that the terminal has a data reading capability, the inventory operation includes a data read operation, the first status identifier includes a first read identifier corresponding to data in a first area, and the first area is a data storage area of to-be-read data.

In an implementation, the transceiver unit 902 is further configured to send a third message, where the third message carries read operation indication information, and the read operation indication information indicates to read data in the first area.

In an implementation, the transceiver unit 902 is further configured to receive an inventory request message, where the inventory request message includes a range of terminals on which the inventory operation is to be performed, a periodicity for performing the inventory operation, information about the first area, and a range of access network elements on which the inventory operation is to be performed.

In an implementation, the inventory operation includes a data read operation, the first status identifier includes a first abnormality record identifier corresponding to data in a second area, and the second area is a data storage area of monitoring data.

In an implementation, the transceiver unit 902 is further configured to send a fourth message, where the fourth message carries read operation indication information, and the read operation indication information is for reading data in the second area.

In an implementation, the transceiver unit 902 is further configured to receive an inventory request message, where the inventory request message includes a range of terminals on which the inventory operation is to be performed, a periodicity for performing the inventory operation, information about the second area, and a range of access network elements on which the inventory operation is to be performed.

In an implementation, the transceiver unit 902 is further configured to receive monitoring data reported by the terminal.

The processing unit 901 is further configured to perform a terminal damage alarm when the monitoring data meets a second value range.

In an implementation, the processing unit 901 is configured to determine the first location information based on the first status identifier.

The transceiver unit 902 is further configured to send the first location information.

In still another possible embodiment, the communication apparatus 900 is used in the access network element.

For example, the transceiver unit 902 is configured to receive a fifth message, where the fifth message includes a first status identifier of a data storage area.

The processing unit 901 is configured to generate a first message based on the fifth message.

The transceiver unit 902 is further configured to send a first message, where the first message includes the first status identifier of the data storage area.

In an implementation, the status identifier includes at least one of the following: an identifier indicating location information, a read identifier corresponding to data in the data storage area, or an abnormality record identifier corresponding to the data in the data storage area.

In an implementation, the processing unit 901 is configured to determine first location information based on the first status identifier.

The transceiver unit 902 is further configured to send the first location information.

In an implementation, the capability information of the terminal indicates that the terminal has a location information writing capability, the inventory operation includes a location information write operation, and the first status identifier indicates the first location information.

In an implementation, the transceiver unit 902 is further configured to send a second message, where the second message carries write operation indication information and the to-be-written first location information.

In an implementation, the transceiver unit 902 is further configured to receive an inventory request message, where the inventory request message includes a range of terminals on which the inventory operation is to be performed, a periodicity for performing the inventory operation, indication information for obtaining a location, and a range of access network elements on which the inventory operation is to be performed.

In an implementation, the capability information of the terminal indicates that the terminal has an identifier reading capability, the inventory operation includes a data read operation, the first status identifier includes a first read identifier corresponding to data in a first area, and the first area is a data storage area of to-be-read data.

In an implementation, the transceiver unit 902 is further configured to send a third message, where the third message carries read operation indication information, and the read operation indication information indicates to read data in the first area.

In an implementation, the transceiver unit 902 is further configured to receive an inventory request message, where the inventory request message includes a range of terminals on which the inventory operation is to be performed, a periodicity for performing the inventory operation, information about the first area, and a range of access network elements on which the inventory operation is to be performed.

In an implementation, the inventory operation includes a data read operation, the first status identifier includes a first abnormality record identifier corresponding to data in a second area, and the second area is a data storage area in which to-be-monitored data is in an abnormal status.

In an implementation, the transceiver unit 902 is further configured to send a fourth message, where the fourth message carries read operation indication information, and the read operation indication information indicates to read data in the second area.

In an implementation, the transceiver unit 902 is further configured to receive an inventory request message, where the inventory request message includes a range of terminals on which the inventory operation is to be performed, a periodicity for performing the inventory operation, information about the second area, and a range of access network elements on which the inventory operation is to be performed.

In an implementation, the transceiver unit 902 is further configured to receive monitoring data reported by the terminal.

The processing unit 901 is further configured to perform a terminal damage alarm when the monitoring data meets a second value range.

In embodiments of this application, division into the modules is an example, is merely logical function division, and may be other division during actual implementation. In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit. For example, the transceiver unit may include a receiving unit and/or a sending unit.

When the integrated unit is implemented in a form of a software functional unit and sold or used as an independent product, the integrated unit may be stored in a computer-readable storage medium. Based on such an understanding, the integrated unit may be stored in a storage medium as a computer software product, and includes several instructions for instructing a computer device (which may be a personal computer, a server, a network device, or the like) or a processor (processor) to perform all or some of the steps of the methods in embodiments of this application.

As shown in FIG. 10, an embodiment of this application further provides a diagram of a structure of a communication apparatus 1000. The communication apparatus 1000 may be configured to implement the methods described in the foregoing method embodiments. For details, refer to the descriptions in the foregoing method embodiments. For example, the communication apparatus 1000 can perform the steps performed by the terminal, the access network element, or the management network element in the methods in FIG. 3 to FIG. 8.

The communication apparatus 1000 includes one or more processors 1001. The processor 1001 may be a general-purpose processor, a dedicated processor, or the like, for example, may be a baseband processor or a central processing unit. The baseband processor may be configured to process a communication protocol and communication data. The central processing unit may be configured to: control a communication apparatus (for example, a base station, a terminal, or a chip), execute a software program, and process data of the software program. The communication apparatus may include a transceiver unit, configured to input (receive) and output (send) a signal. For example, the transceiver unit may be a transceiver, a radio frequency chip, or the like.

The communication apparatus 1000 includes one or more processors 1001, and the one or more processors 1001 may implement the methods in the foregoing embodiments. Optionally, the processor 1001 may further implement another function in addition to the methods in the foregoing embodiments.

In a design, the processor 1001 may execute instructions, so that the apparatus 1000 performs the methods described in the foregoing method embodiments. All or some of the instructions may be stored in the processor 1001. For example, all or some of instructions 1003 may be stored in the processor 1001, or the instructions 1003 are stored in the processor 1001, and instructions 1004 are stored in a memory 1002 coupled to the processor. The processor 1001 may synchronously execute the instructions 1003 and the instructions 1004, so that the communication apparatus 1000 performs the methods described in the foregoing method embodiments. The instructions 1003 and the instructions 1004 are also referred to as computer programs.

In another possible design, the communication apparatus 1000 may further include a circuit, and the circuit may implement functions in the foregoing method embodiments.

In still another possible design, the communication apparatus 1000 may include one or more memories 1002. The one or more memories 1002 store instructions 1004. The instructions may be run on the processor 1001, so that the apparatus 1000 performs the methods described in the foregoing method embodiments. Optionally, the memory 1002 may further store data. Optionally, the processor 1001 may alternatively store instructions and/or data. For example, the one or more memories 1002 may store the correspondence described in the foregoing embodiments, or the related parameter, table, or the like in the foregoing embodiments. The processor and the memory may be separately disposed, or may be integrated.

In still another possible design, the apparatus 1000 may further include a transceiver 1005 and an antenna 1006. The processor 1001 may be referred to as a processing unit, and controls the apparatus (a terminal or a base station). The transceiver 1005 may be referred to as a transceiver, a transceiver circuit, a transceiver unit, or the like, and is configured to implement a transceiver function of the apparatus by using the antenna 1006.

The processor may be a general-purpose central processing unit (central processing unit, CPU), a microprocessor, an application-specific integrated circuit (application-specific integrated circuit, ASIC), one or more integrated circuits configured to control program execution of the solutions of this application, a general-purpose processor, a digital signal processor (digital signal processor, DSP), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be in a storage medium, and the storage medium is located in a memory.

The memory may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example and not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (synchronous link DRAM, SLDRAM), and a direct rambus random access memory (Direct Rambus RAM, DR RAM). It should be noted that the memory of the systems and methods described in this specification includes but is not limited to these and any memory of another proper type. The memory may independently exist and may be connected to the processor through a communication line. The memory may alternatively be integrated with the processor.

An embodiment of this application further provides a communication system, including a terminal, an access network element, and a management network element. The terminal, the access network element, and the management network element may implement the communication method in any one of the foregoing method embodiments.

An embodiment of this application further provides a computer-readable medium. The computer-readable medium stores a computer program. When the computer program is executed by a computer, the communication method in any one of the foregoing method embodiments is implemented.

An embodiment of this application further provides a computer program product, including a computer program. When the computer program is executed by a computer, the communication method in any one of the foregoing method embodiments is implemented.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer instructions are loaded and executed on a computer, all or some of the procedures or functions according to embodiments of this application are generated. The computer may be the foregoing communication apparatus. The computer instructions may be stored in a computer-readable storage medium, or may be transmitted from one computer-readable storage medium to another computer-readable storage medium. The computer-readable storage medium may be the foregoing storage medium or the foregoing memory.

In a possible design, when the communication apparatus is a chip, for example, a chip in a network device or a chip in a terminal device, the processing unit or the processor 1001 may be one or more logic circuits, and the sending unit, the receiving unit, or the transceiver 1005 may be an input/output interface, or may be referred to as a communication interface, an interface circuit, an interface, or the like. Alternatively, the transceiver 1005 may be a sending unit and a receiving unit. The sending unit may be an output interface, and the receiving unit may be an input interface. The sending unit and the receiving unit are integrated into one unit, for example, an input/output interface. As shown in FIG. 11, a communication apparatus 1100 shown in FIG. 11 includes a logic circuit 1101 and an interface circuit 1102. In other words, the processing unit or the processor 1001 may be implemented by using the logic circuit 1101, and the transceiver unit or the transceiver 1005 may be implemented by using the interface circuit 1102. The logic circuit 1101 may be a chip, a processing circuit, an integrated circuit, a system on chip (system on chip, SoC), or the like. The interface circuit 1102 may be a communication interface, an input/output interface, or the like. In embodiments of this application, the logic circuit may be coupled to the interface circuit. A specific connection manner of the logic circuit and the interface circuit is not limited in embodiments of this application.

In some embodiments of this application, the logic circuit 1101 and the interface circuit 1102 may be configured to perform functions, operations, or the like performed by the foregoing network function or control plane function. The interface circuit 1102 may be configured to receive a signal from a communication apparatus other than the communication apparatus 1100 and transmit the signal to the logic circuit 1101, or send a signal from the logic circuit 1101 to a communication apparatus other than the communication apparatus 1100. The logic circuit 1101 may be configured to implement any one of the foregoing method embodiments by executing code instructions.

For example, the interface circuit 1102 is configured to receive a first message. For functions or operations performed by the communication apparatus, refer to the foregoing method embodiments. Details are not described herein again.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

**In** several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, in other words, may be located in one position, or may be distributed on a plurality of network units. Some or all of the units may be selected according to actual requirements to achieve the objectives of the solutions of embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

With descriptions of the foregoing implementations, a person skilled in the art may clearly understand that this application may be implemented by hardware, firmware, or a combination thereof. When the implementations are implemented by software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a computer.

In conclusion, the foregoing descriptions are merely embodiments of the technical solutions of this application, but are not intended to limit the protection scope of this application. Any modification, equivalent replacement, improvement, or the like made within the principle of this application should fall within the protection scope of this application.

## Claims

1. A communication method, wherein the method comprises:
receiving, by a terminal, a first message, wherein the first message comprises a first status identifier of a data storage area;
storing, by the terminal, a second status identifier of the storage area; and
determining, by the terminal based on the first status identifier and the second status identifier, whether to respond to an inventory operation.

2. The method according to claim 1, wherein the status identifier comprises at least one of the following: an identifier indicating location information, a read identifier corresponding to data in the data storage area, or an abnormality record identifier corresponding to the data in the data storage area.

3. The method according to claim 1 or 2, wherein the terminal has a location information writing capability, the inventory operation comprises a location information write operation, the first status identifier indicates first location information, and the second status identifier indicates second location information; and
the determining, by the terminal based on the first status identifier and the second status identifier, whether to respond to an inventory operation comprises:
determining, by the terminal, whether the first location information matches the second location information; and
if the first location information matches the second location information, determining, by the terminal, not to respond to the inventory operation; or
if the first location information does not match the second location information, determining, by the terminal, to respond to the inventory operation.

4. The method according to claim 3, wherein the determining, by the terminal, whether the first location information matches the second location information comprises:
performing, by the terminal, an exclusive OR operation on the first location information and the second location information; and
if a bit that is 1 exists in a result of the exclusive OR operation, determining that the first location information does not match the second location information; or
if all bits in the result are 0, determining that the first location information matches the second location information.

5. The method according to claim 3 or 4, wherein the method further comprises:
if determining to respond to the inventory operation, receiving, by the terminal, a second message, wherein the second message carries write operation indication information and the to-be-written first location information; and
writing, by the terminal, the first location information based on the write operation indication information.

6. The method according to claim 3 or 4, wherein the location information comprises at least one of a tracking area code TAC, a cell identifier, or a base station identifier.

7. The method according to claim 1 or 2, wherein the terminal has an identifier reading capability, the inventory operation comprises a data read operation, the first status identifier comprises a first read identifier corresponding to data in a first area, the first area is a data storage area of to-be-read data, and the second status identifier comprises a second read identifier corresponding to the data in the first area; and
the determining, by the terminal based on the first status identifier and the second status identifier, whether to respond to an inventory operation comprises:
determining, by the terminal, whether the first read identifier matches the second read identifier; and
if the first read identifier matches the second read identifier, determining, by the terminal, to respond to the inventory operation; or
if the first read identifier does not match the second read identifier, determining, by the terminal, not to respond to the inventory operation.

8. The method according to claim 7, wherein the determining, by the terminal, whether the first read identifier matches the second read identifier comprises:
performing, by the terminal, an exclusive OR operation on the first read identifier and the second read identifier; and
if a result of the exclusive OR operation is 0, determining that the first read identifier matches the second read identifier; or
if the result is 1, determining that the first read identifier does not match the second read identifier.

9. The method according to claim 7 or 8, wherein the method further comprises:
if determining to respond to the inventory operation, receiving, by the terminal, a third message, wherein the third message carries read operation indication information, and the read operation indication information indicates to read data in the first area; and
replying, by the terminal, with the read data.

10. The method according to claim 1 or 2, wherein the terminal has an abnormality alarm capability, the inventory operation comprises a data read operation, the first status identifier comprises a first abnormality record identifier corresponding to data in a second area, the second area is a data storage area of monitoring data, and the second status identifier comprises a second abnormality record identifier corresponding to the data in the second area; and
the determining, by the terminal based on the first status identifier and the second status identifier, whether to respond to an inventory operation comprises:
determining, by the terminal, whether the first abnormality record identifier matches the second abnormality record identifier; and
if the first abnormality record identifier matches the second abnormality record identifier, determining, by the terminal, to respond to the inventory operation; or
if the first abnormality record identifier does not match the second abnormality record identifier, determining, by the terminal, not to respond to the inventory operation.

11. The method according to claim 10, wherein the determining, by the terminal, whether the first abnormality record identifier matches the second abnormality record identifier comprises:
performing, by the terminal, an exclusive OR operation on the first abnormality record identifier and the second abnormality record identifier; and
if a result of the exclusive OR operation is 0, determining that the first abnormality record identifier matches the second abnormality record identifier; or
if the result is 1, determining that the first abnormality record identifier does not match the second abnormality record identifier.

12. The method according to claim 10 or 11, wherein the method further comprises:
if determining to respond to the inventory operation, receiving, by the terminal, a fourth message, wherein the fourth message carries read operation indication information, and the read operation indication information is for reading data in the second area; and
replying, by the terminal, with the read data.

13. A communication method, wherein the method comprises:
obtaining, by a management network element, capability information of a terminal, wherein the capability information of the terminal indicates an inventory operation supported by the terminal; and
sending, by the management network element, a fifth message based on the capability information of the terminal, wherein the fifth message comprises a first status identifier of a data storage area.

14. The method according to claim 13, wherein the status identifier comprises at least one of the following: an identifier indicating location information, a read identifier corresponding to data in the data storage area, or an abnormality record identifier corresponding to the data in the data storage area.

15. The method according to claim 13 or 14, wherein the capability information of the terminal indicates that the terminal has a location information writing capability, the inventory operation comprises a location information write operation, and the first status identifier indicates first location information.

16. The method according to claim 15, wherein the method further comprises:
receiving, by the management network element, a first response message; and
sending, by the management network element, a second message based on the first response message, wherein the second message carries write operation indication information and the to-be-written first location information.

17. The method according to claim 13 or 14, wherein the capability information of the terminal indicates that the terminal has an identifier reading capability, the inventory operation comprises a data read operation, the first status identifier comprises a first read identifier corresponding to data in a first area, and the first area is a data storage area of to-be-read data.

18. The method according to claim 17, wherein the method further comprises:
receiving, by the management network element, a second response message; and
sending, by the management network element, a third message based on the second response message, wherein the third message carries read operation indication information, and the read operation indication information indicates to read data in the first area.

19. The method according to claim 13 or 14, wherein the inventory operation comprises a data read operation, the first status identifier comprises a first abnormality record identifier corresponding to data in a second area, and the second area is a data storage area of monitoring data.

20. The method according to claim 19, wherein the method further comprises:
receiving, by the management network element, a third response message; and
sending, by the management network element, a fourth message based on the third response message, wherein the fourth message carries read operation indication information, and the read operation indication information indicates to read data in the second area.

21. A communication method, wherein the method comprises:
receiving, by an access network element, a fifth message, wherein the fifth message comprises a first status identifier of a data storage area; and
sending, by the access network element, a first message based on the fifth message, wherein the first message comprises the first status identifier of the data storage area.

22. The method according to claim 21, wherein the status identifier comprises at least one of the following: an identifier indicating location information, a read identifier corresponding to data in the data storage area, or an abnormality record identifier corresponding to the data in the data storage area.

23. The method according to claim 21 or 22, wherein the first status identifier indicates first location information;
the first status identifier comprises a first read identifier corresponding to data in a first area, and the first area is a data storage area of to-be-read data; or
the first status identifier comprises a first abnormality record identifier corresponding to data in a second area, and the second area is a data storage area of monitoring data.

24. The method according to claim 23, wherein the method further comprises:
determining, by the access network element, the first location information based on the first status identifier; and
sending, by the access network element, the first location information.

25. A communication apparatus, comprising a processor, wherein the processor is coupled to a memory; and
the processor is configured to execute a computer program or instructions stored in the memory, to enable the apparatus to perform the method according to any one of claims 1 to 24.

26. A computer-readable storage medium, comprising a computer program or instructions, wherein when the computer program or the instructions are run on a computer, the method according to any one of claims 1 to 24 is performed.

27. A computer program product, comprising a computer program or instructions, wherein when the computer program or the instructions are run on a computer, the method according to any one of claims 1 to 24 is performed.

28. A communication apparatus, comprising a logic circuit and an interface circuit, wherein the interface circuit is configured to: receive a signal from a communication apparatus other than the communication apparatus and transmit the signal to the logic circuit, or send a signal from the logic circuit to a communication apparatus other than the communication apparatus; and the logic circuit is configured to implement the method according to any one of claims 1 to 24 by executing code instructions.

29. A communication system, comprising a communication apparatus for performing the method according to any one of claims 13 to 20 and a communication apparatus for performing the method according to any one of claims 21 to 24.

30. A chip system, wherein the chip system comprises:
a processor and a memory, wherein the processor is coupled to the memory, the memory is configured to store a program or instructions, and when the program or the instructions are executed by the processor, the method according to any one of claims 1 to 24 is implemented.
